# FASCICULE DE BREVET EUROPEEN

(11) **EP 0 466 533 B1**
(45) Date de publication et mention de la délivrance du brevet: **15.03.1995**
(21) Numéro de dépôt: 91401600.1
(22) Date de dépôt: 14.06.1991
(51) Int. Cl.: G21F 9/30

(54) **Procédé et dispositif de démantèlement d'un composant irradié d'un réacteur nucléaire par découpage de sa paroi**
Verfahren und Vorrichtung zur Zerlegung eines bestrahlten Bestandteiles eines Kernreaktors durch Ausschneidung seiner Wandung
Process and device for dismantling an irradiated component of a nuclear reactor by cutting up its shell

(30) Priorité: 27.06.1990 FR 9008117; 07.11.1990 FR 9013816
(43) Date de publication de la demande: 15.01.1992
(73) Titulaire: FRAMATOME, 92400 Courbevoie (FR)
(72) Inventeur: Jacquier, Paul, F-69160 Tassin-la-Demi-Lune (FR); Guigon, Jean-Paul, F-71640 Givry (FR)
(74) Mandataire: Bouget, Lucien

(56) Documents cités:
- DE-A- 2 554 256
- US-A- 4 813 313
- PATENT ABSTRACTS OF JAPAN vol. 13, no. 475 (P-950)(3823) 27 Octobre 1989 & JP-A-1 187 499 (SCIENCE & TECHN. AGENCY) 26 Juillet 1989
- PATENT ABSTRACTS OF JAPAN vol. 13, no. 324 (P-903)(3672) 21 Juillet 1989 & JP-A-62 249 986 (KAJIMA CORP.) 11 Avril 1989

## Description

L'invention concerne un procédé et un dispositif de démantèlement d'un composant irradié d'un réacteur nucléaire et en particulier d'une cuve d'un réacteur nucléaire refroidi par de l'eau sous pression.

Les réacteurs nucléaires refroidis à l'eau et en particulier les réacteurs nucléaires à eau sous pression comportent une cuve qui est destinée à contenir le coeur du réacteur nucléaire et qui est raccordée au circuit de refroidissement du réacteur dans lequel circule l'eau de refroidissement.

La paroi de la cuve du réacteur qui est en contact avec le fluide de refroidissement et exposée aux rayonnements émis par le coeur du réacteur peut être activée et contaminée, après un certain temps de fonctionnement du réacteur.

Dans le cas des centrales nucléaires parvenues en fin de vie et qui nécessitent un arrêt complet, jusqu'ici, la solution retenue a été de laisser ces centrales dans l'état où elles se trouvaient et de laisser décroître l'activité des matériaux constitutifs de leurs composants, afin de les démonter ultérieurement, dans des conditions plus satisfaisantes qu'au moment de l'arrêt, sans avoir à utiliser des outillages complexes commandés à distance.

Dans l'avenir, le nombre de centrales qui seront mises hors d'exploitation industrielle augmentera sensiblement, si bien qu'il est nécessaire d'envisager un démantèlement de ces centrales, afin de restaurer dans son état d'origine, le site où elles sont implantées.

Le démantèlement de la partie classique de la centrale ne pose pas de problème particulier mais en revanche, le démantèlement de la partie de la centrale constituant le réacteur nucléaire proprement dit pose des problèmes difficiles à résoudre, du fait des émissions radio-actives des matériaux constitutifs des composants du réacteur.

En particulier, la cuve des réacteurs nucléaires refroidis par de l'eau qui contient les assemblages combustibles et qui est en contact avec l'eau de refroidissement du réacteur pendant son fonctionnement est activée et contaminée, dans le cas des réacteurs parvenus en fin de vie.

Dans le cas des réacteurs nucléaires à eau sous pression actuellement en fonctionnement, la cuve du réacteur se présente sous la forme d'un corps de forme générale cylindrique fermé par des fonds bombés, de grande dimension et ayant une forte épaisseur de paroi.

La cuve qui présente une masse très élevée est disposée à l'intérieur d'un puits de cuve ménagé dans une structure en béton qui délimite également une ou plusieurs piscines situées au-dessus du niveau supérieur de la cuve.

La cuve qui renferme, en plus des assemblages combustibles, diverses structures internes est reliée, par des tubulures, à des canalisations du circuit primaire du réacteur.

Les assemblages du coeur et certains composants des structures internes peuvent être démontés et sortis de la cuve, de manière à assurer leur évacuation et, éventuellement, leur élimination, au moment de la mise hors service du réacteur.

Certains composants des structures internes très activées du réacteur tels que l'enveloppe du coeur peuvent nécessiter d'être maintenus à l'intérieur de la cuve, afin d'être découpés sous eau (protection radiologique). Leur démantèlement doit être assuré à l'intérieur de la cuve et pendant les opérations de démantèlement de la cuve elle-même.

Par exemple, dans le US-A-4.813.313, est décrit un appareillage permettant de réaliser la démolition d'une paroi de protection d'un réacteur nucléaire de forme générale cylindrique et disposée dans un puits vertical. On réalise le découpage de la paroi par tranches successives dans la direction verticale pour obtenir des blocs qui sont évacués en vue de leur élimination ou de leur stockage.

Les moyens de découpage et de manutention des blocs sont montés sur une structure verticale telle qu'un mât pour être mis en place successivement à différentes hauteurs dans le puits.

La réalisation du découpage et de l'évacuation des blocs découpés à une distance verticale importante du bord supérieur du puits peut présenter des difficultés

Le but de l'invention est donc de proposer un procédé de démantèlement d'un composant irradié d'un réacteur nucléaire comportant au moins une paroi de forme tubulaire disposée avec son axe dans la direction verticale et fixée à l'intérieur d'un puits ménagé dans une structure en béton, selon lequel on réalise le découpage du composant sous forme de blocs par étapes successives séparées par un déplacement dans la direction verticale et on évacue les blocs découpés pour réaliser leur élimination ou leur stockage, ce procédé permettant de réaliser dans de très bonnes conditions de sécurité et de manière simple, la fragmentation de la paroi du composant et l'évacuation et l'élimination des fragments obtenus, au niveau supérieur du puits.

Dans ce but :
- on supprime les éléments de liaison entre la structure en béton et le composant,
- on déplace le composant d'une certaine distance dans la direction verticale, suivant son axe, à l'intérieur du puits et par étapes successives,
- on réalise le découpage de la paroi du composant sur une hauteur correspondant sensiblement à la distance verticale de déplacement du composant et de manière à obtenir des blocs du matériau irradié de la paroi, au niveau supérieur du puits de la structure en béton, après le déplacement du composant.

De manière avantageuse et pour accroître la sûreté du procédé, pour réaliser le déplacement du composant dans la direction verticale, par étapes successives :
- on place sous une partie inférieure du composant et en appui sur un support fixe reposant sur la structure en béton du réacteur, au voisinage du fond du puits de cuve, des premiers moyens de soulèvement du composant,
- on réalise le levage du composant, par poussée des premiers moyens de soulèvement sur la partie inférieure du composant,
- on introduit un premier élément modulaire de support entre la partie inférieure du composant et le support fixe sur lequel l'élément modulaire vient en appui,
- on actionne les premiers moyens de soulèvement dans le sens inverse du levage, pour mettre en appui la partie inférieure du composant sur le premier élément modulaire,

et pour chacune des étapes successives ultérieures de déplacement du composant :
- on réalise un levage unitaire du composant sur une distance verticale déterminée, grâce à des seconds moyens de soulèvement en appui sur le support et en prise avec un élément modulaire de support intercalé entre le composant et le support fixe et reposant sur le support fixe avant le levage unitaire du composant,
- on introduit un élément modulaire de support dont la hauteur est inférieure à la distance verticale de levage unitaire du composant, entre l'élément modulaire avec lequel coopèrent les seconds moyens de soulèvement et le support fixe, et
- on actionne les seconds moyens de soulèvement dans le sens inverse du levage, pour mettre en appui le composant sur le support par l'intermédiaire des éléments modulaires superposés.

L'invention est également relative à un dispositif mettant en oeuvre le procédé de démantèlement suivant l'invention, selon les revendications 12 et 22.

Afin de bien faire comprendre l'invention, on va maintenant décrire, à titre d'exemples non limitatifs, plusieurs modes de réalisation du procédé de démantèlement suivant l'invention et les outillages permettant de mettre en oeuvre ce procédé, dans le cas du démantèlement d'une cuve d'un réacteur nucléaire à eau sous pression.

La figure 1 est une vue en coupe verticale d'une cuve de réacteur nucléaire à eau sous pression et de sa structure de support en béton.

La figure 2 est une vue schématique en coupe par un plan vertical des moyens de déplacement d'une cuve de réacteur nucléaire en cours de démantèlement par le procédé suivant l'invention et des moyens d'évacuation des blocs découpés dans la paroi de la cuve.

La figure 3 est une vue en coupe par un plan vertical et en élévation des moyens de fixation du fond de la cuve à l'extrémité d'un mât de déplacement dans la direction verticale.

La figure 4 est une vue de dessus suivant 4 de la figure 3, des moyens de fixation de la cuve.

La figure 5 est une vue de dessus suivant 5 de la figure 2, des moyens de support et de manutention utilisés pour le démantèlement de la cuve.

La figure 6 est une vue en coupe par un plan vertical et en élévation de l'ensemble des moyens de manutention et de découpage d'une cuve en cours de démantèlement par le procédé suivant l'invention.

La figure 7 est une vue en coupe par un plan vertical de la partie supérieure des moyens de support et de déplacement dans la direction verticale de la cuve en cours de démantèlement.

Les figures 8A à 8F sont des vues schématiques des moyens de déplacement de la cuve dans la direction verticale, au cours de différentes étapes successives du déplacement de la cuve dans la direction verticale et vers le haut.

La figure 9 est une vue en coupe par un plan vertical de moyens de type scie à ruban pour le découpage de la paroi de la cuve suivant une direction sensiblement horizontale.

La figure 10 est une vue de dessus suivant 10 de la figure 9.

La figure 11 est une vue en coupe par un plan vertical de moyens du type scie à ruban pour le découpage de la paroi de la cuve suivant une direction sensiblement verticale.

La figure 12 est une vue de dessus suivant 12 de la figure 11.

La figure 13 est une vue développée de la paroi latérale de la cuve montrant les lignes de découpage de cette paroi, lors de la mise en oeuvre du procédé suivant l'invention en utilisant des dispositifs tels que représentés sur les figures 9 et 11.

La figure 14 est une vue en coupe par un plan vertical de moyens du type scie circulaire pour le découpage de la paroi de la cuve suivant une direction sensiblement horizontale.

La figure 15 est une vue de dessus suivant 15 de la figure 14.

La figure 16 est une vue en coupe par un plan vertical de moyens du type scie circulaire pour le découpage de la paroi d'une cuve, suivant une direction sensiblement verticale.

La figure 17 est une vue de dessus suivant 17 de la figure 16.

Les figures 18 à 26 sont relatives au démantèlement d'une cuve de réacteur nucléaire par un procédé mettant en oeuvre un levage de la cuve par étapes successives, par poussée sur sa partie inférieure.

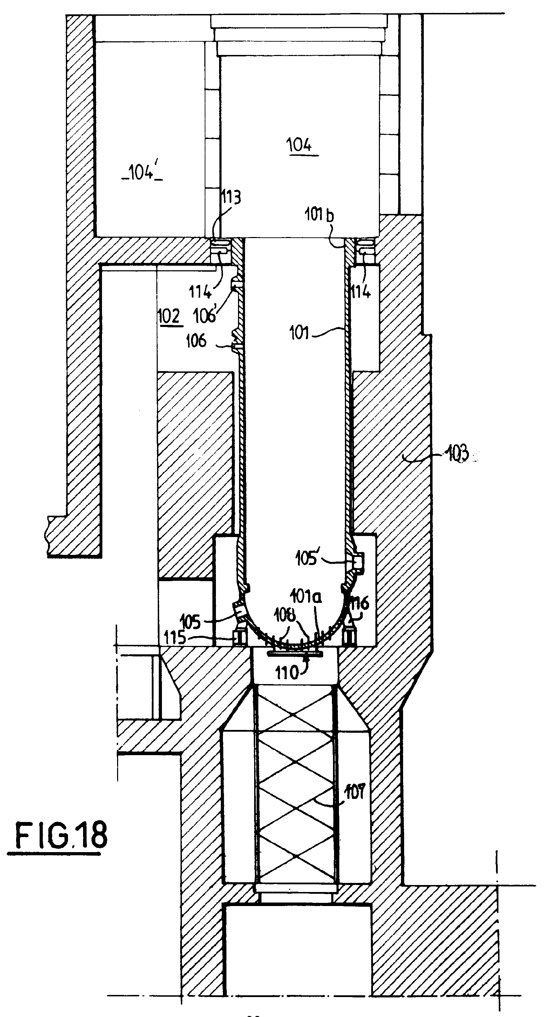

La figure 18 est une vue en élévation et en coupe d'une cuve d'un réacteur nucléaire refroidi par de l'eau, en place dans la structure du réacteur, avant son démantèlement.

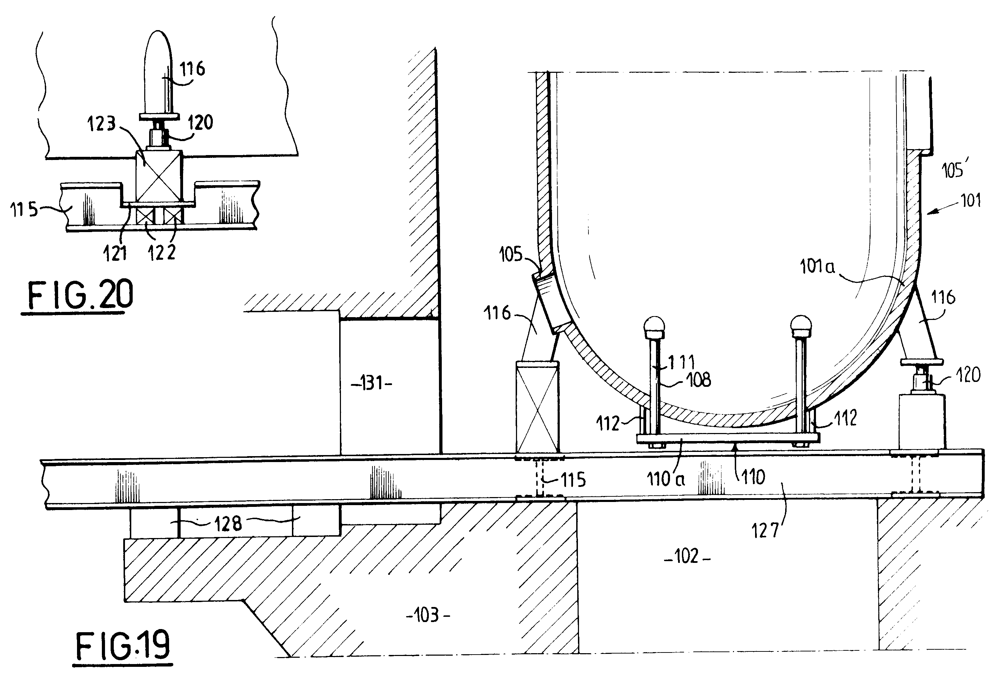

La figure 19 est une vue en élévation et en coupe partielle de la partie inférieure de la cuve représentée sur la figure 18, pendant une phase de levage initiale utilisant des premiers moyens de soulèvement.

La figure 20 est une vue en élévation d'un moyen de soulèvement de la cuve.

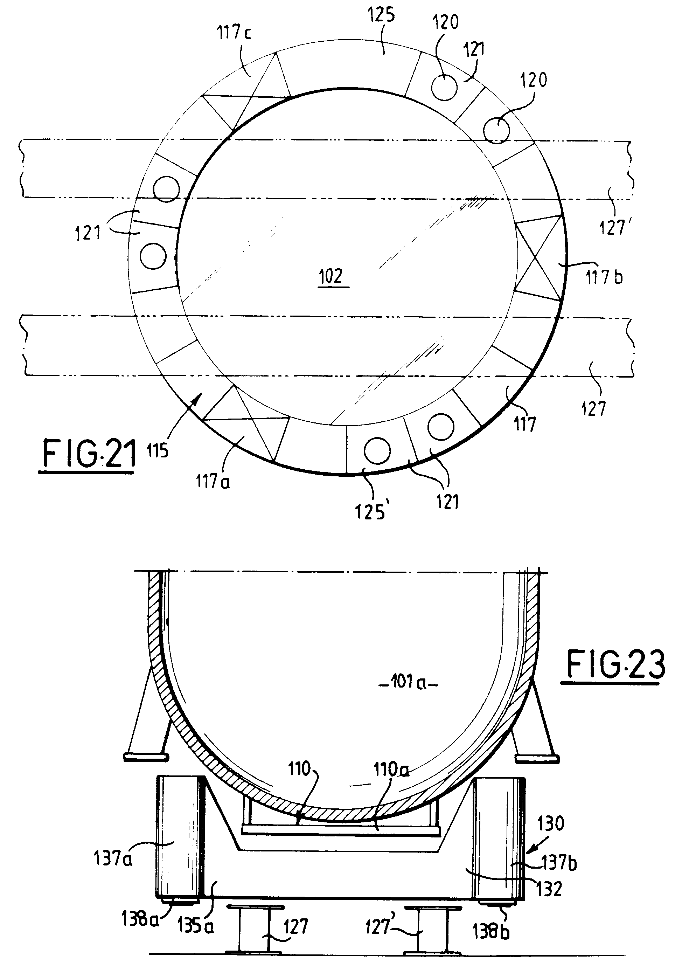

La figure 21 est une vue de dessus du support fixe de la cuve constitué sous la forme d'un anneau.

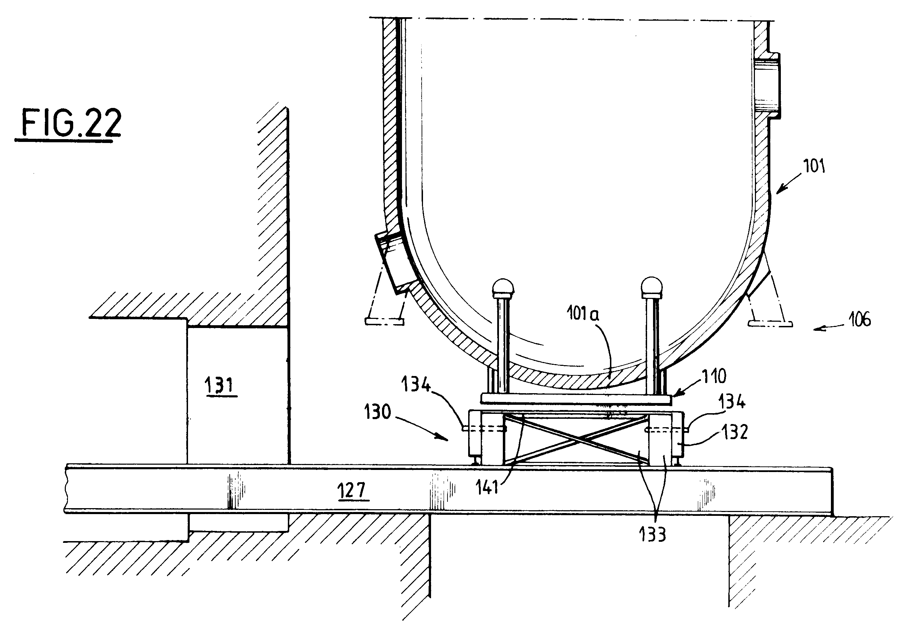

La figure 22 est une vue en élévation et en coupe partielle de la partie inférieure de la cuve après mise en place de seconds moyens de soulèvement et d'un premier élément modulaire de support.

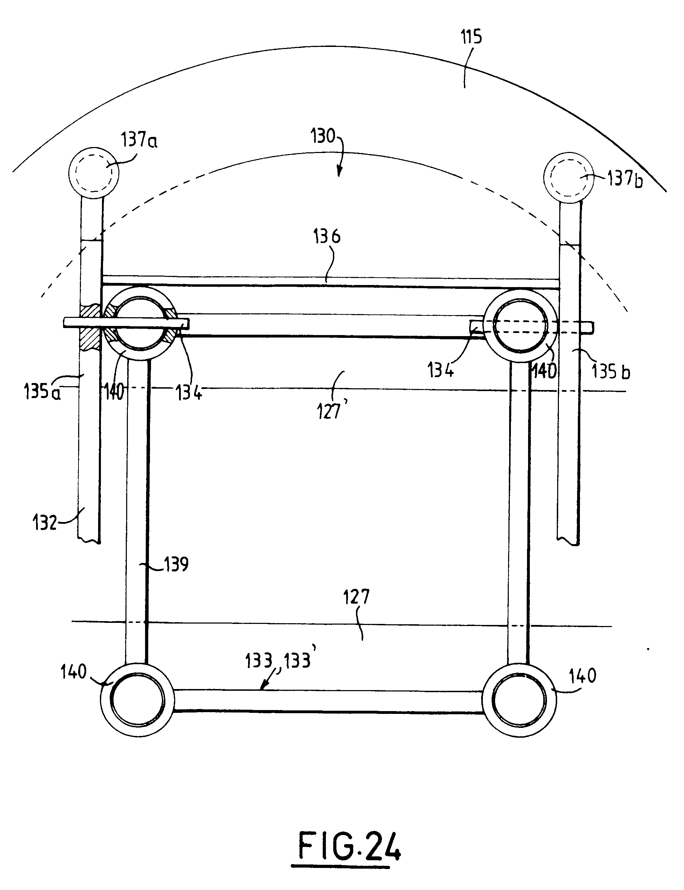

La figure 23 est une vue en élévation latérale suivant 23 de la figure 22.

La figure 24 est une vue de dessus avec coupe partielle des seconds moyens de soulèvement et du premier élément de support modulaire en place sur le support fixe de la cuve.

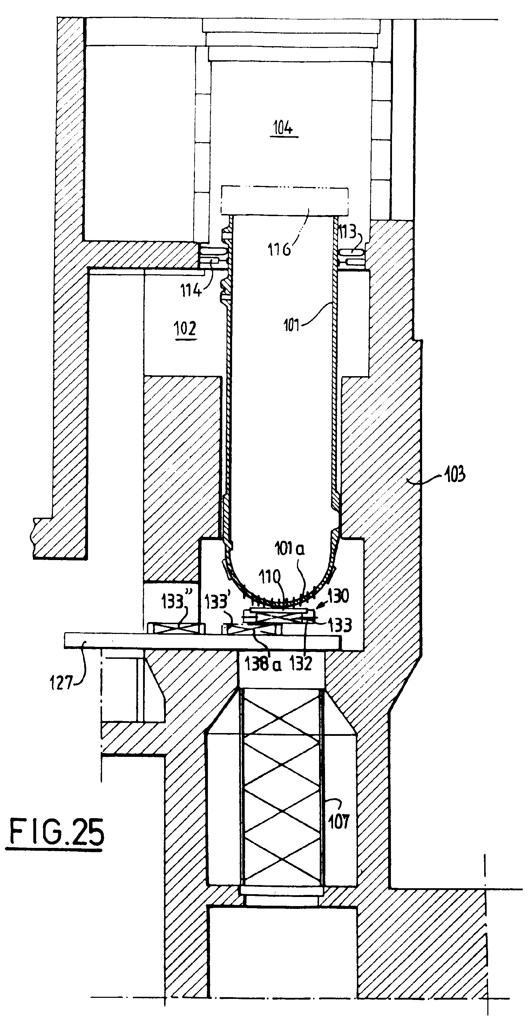

La figure 25 est une vue en coupe par un plan vertical de la structure du réacteur et de la cuve, pendant une des phases initiales du démantèlement.

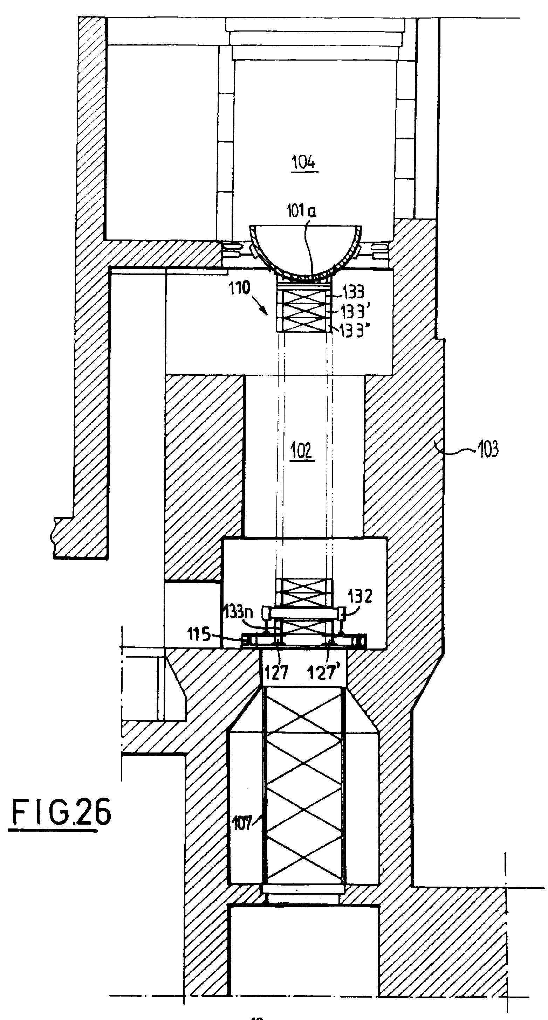

La figure 26 est une vue en coupe par un plan vertical de la structure du réacteur et de la cuve, pendant une des phases finales du démantèlement.

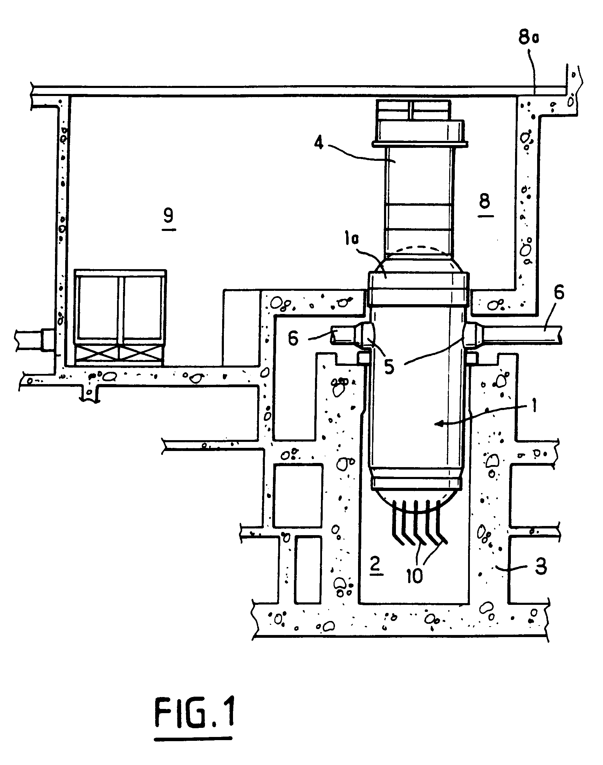

Sur la figure 1, on voit la cuve 1 d'un réacteur nucléaire à eau sous pression montée à l'intérieur d'un puits de cuve 2 ménagé à l'intérieur d'une structure en béton 3 constituant une partie du bâtiment réacteur de la centrale nucléaire.

La cuve 1 qui présente une forme générale cylindrique est disposée dans le puits de cuve 2 avec son axe vertical. La cuve 1 est fermée à sa partie inférieure par un fond bombé et à sa partie supérieure par un couvercle 1a également de forme bombée.

Au-dessus du couvercle 1a de la cuve est disposé l'ensemble 4 des mécanismes de commande des barres de réglage de la réactivité du coeur du réacteur constitué par des assemblages combustibles juxtaposés et placés à l'intérieur de la cuve 1.

La cuve 1 est reliée, par l'intermédiaire de tubulures 5, aux canalisations 6 des différentes boucles du circuit primaire du réacteur dans lesquelles circule l'eau sous pression venant en contact avec les assemblages du coeur à l'intérieur de la cuve 1 et assurant l'échauffement et la vaporisation d'eau alimentaire à l'intérieur des générateurs de vapeur de la centrale.

La structure en béton 3 constitue, au-dessus du puits de cuve 2, une piscine 8 qui peut être remplie d'eau jusqu'au voisinage de son niveau supérieur 8a, pour permettre d'assurer des opérations de manutention et d'entretien à l'intérieur de la cuve du réacteur nucléaire, pendant les arrêts du réacteur et après enlèvement de l'ensemble de commande 4 et du couvercle 1a de la cuve.

La piscine 8 comporte une partie 9 placée dans une disposition latérale par rapport à la piscine du réacteur proprement dite située à l'aplomb de la cuve, dans laquelle on peut venir disposer les équipements internes de la cuve du réacteur, pour réaliser sous eau des opérations d'entretien ou de réparation de ces équipements internes.

Le fond de la cuve 1 est traversé par des conduits d'instrumentation 10 qui sont reliés à un local d'instrumentation situé dans une position latérale par rapport au puits de cuve 2.

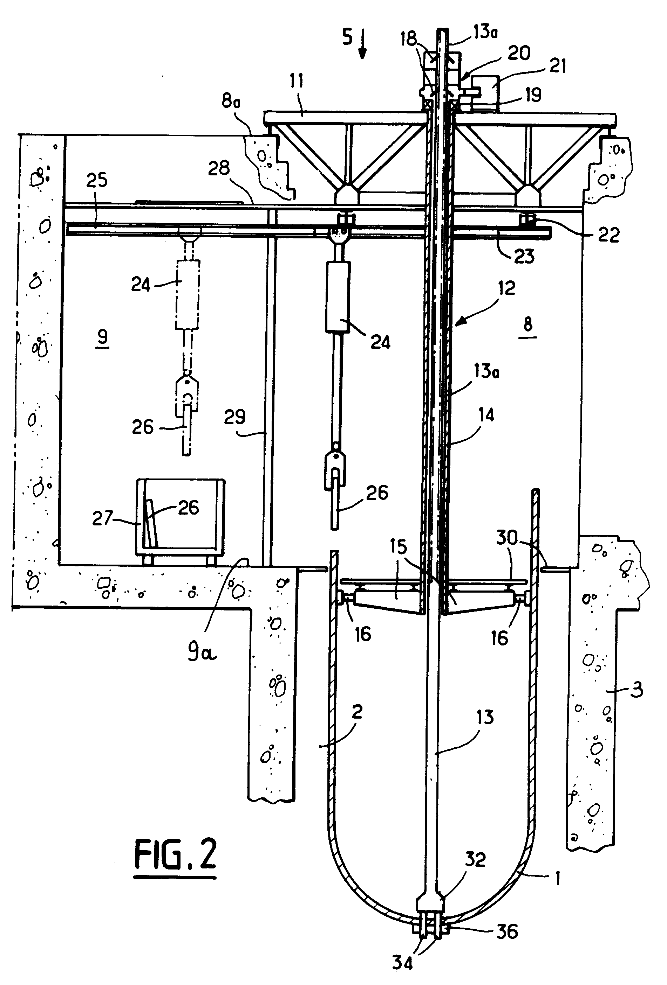

Sur la figure 2, on a représenté la cuve 1 d'un réacteur nucléaire à eau sous pression, pendant une opération de démantèlement effectuée en utilisant le procédé suivant l'invention.

Le procédé suivant l'invention est mis en oeuvre après un arrêt définitif du réacteur nucléaire et après qu'on ait réalisé le déchargement des assemblages du coeur et des équipements internes du réacteur nucléaire.

Après l'arrêt et le refroidissement du réacteur nucléaire, la piscine 8 est remplie d'eau et le couvercle de la cuve est enlevé.

On réalise alors sous eau le déchargement des assemblages du coeur et le démontage et l'évacuation des équipements internes de la cuve.

Les assemblages combustibles peuvent être placés dans des conteneurs permettant d'assurer leur transport et leur évacuation vers une usine de retraitement.

Les équipements internes généralement très irradiés peuvent être stockés de manière temporaire avant d'être démantelés sous eau et évacués dans des conteneurs de transport.

Il est également possible de réaliser au moins partiellement le démantèlement sous eau des équipements internes de la cuve, à l'intérieur de celle-ci.

Après déchargement de la cuve, évacuation des internes et vidange de la piscine, on met en place au-dessus du niveau supérieur 8a de la piscine du réacteur, une structure de support 11 constituée par des poutres sur laquelle repose la partie supérieure d'un dispositif de levage 12 comportant en particulier un mât de grande longueur 13 qui est disposé verticalement suivant l'axe de la cuve 1 et relié, à sa partie inférieure, au fond de la cuve 1.

Le mât 13 est disposé à l'intérieur d'une structure tubulaire 14 placée verticalement suivant l'axe de la cuve 1 et reliée à sa partie supérieure à la structure de support 11. Des bras 15 de centrage et de maintien du dispositif 12 à l'intérieur de la cuve comportant chacun un vérin 16 à son extrémité sont fixés à la partie inférieure de la structure tubulaire 14 et disposés en étoile autour de cette structure tubulaire. Les vérins 16 qui viennent en appui par leur partie d'extrémité sur la surface intérieure de la cuve 1 permettent de réaliser le centrage et le maintien de la cuve 1, par rapport à la structure tubulaire 14 et au mât 13.

Le mât 13 comporte une denture 13a sur une partie substantielle de sa longueur, la denture 13a venant coopérer avec des cliquets 18 d'un mécanisme de levage 20 de la cuve reposant sur la structure de support 11 par l'intermédiaire d'un palier de butée rotatif 19.

La partie tournante du palier 19 peut être entraînée en rotation autour de l'axe vertical commun au puits de cuve 2 et à la cuve 1, par un moteur 21.

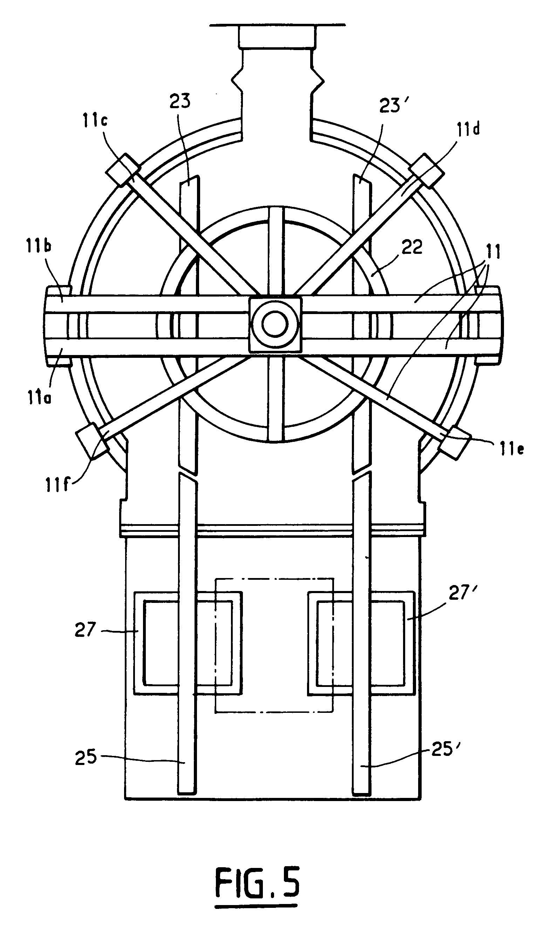

La structure de support 11 porte à sa partie inférieure un rail circulaire 22 sur lequel sont montés mobiles en rotation autour de l'axe du puits de cuve, par l'intermédiaire de chariots, deux monorails 23 et 23′ visibles sur la figure 5 permettant le déplacement de palans 24 dans toute la zone située au-dessus du bord supérieur de la cuve 1 et dans la piscine de stockage des internes 9, grâce à la présence de rails fixes 25 et 25′ dans le prolongement desquels on peut venir placer les rails mobiles en rotation 23 et 23′.

Comme il sera expliqué plus loin, le découpage de blocs 26 de matériau irradié dans la paroi de la cuve est effectué sensiblement au niveau du fond 9a de la piscine 9 des équipements internes, c'est-à-dire au niveau supérieur du puits de cuve.

Lorsqu'un bloc 26 a été découpé dans la paroi de la cuve 1, un palan 24 peut assurer la prise de ce bloc dans une position quelconque et le transport du bloc 26 dans la piscine 9 des équipements internes dans laquelle est disposé un conteneur 27 de stockage et de transport des blocs 26 de matériau irradié. Le palan 24 permet de transporter les blocs 26 entre leur zone de découpage et leur zone de stockage à l'intérieur du conteneur 27.

Des parois de confinement de zone 28 sont placées au niveau supérieur de la piscine, en-dessous de la structure de support 11, afin d'isoler la zone dans laquelle est réalisé le découpage des blocs 26 lors du démantèlement de la cuve 1, de la zone située au-dessus de la piscine depuis laquelle on réalise la commande des différentes opérations mises en oeuvre pour le démantèlement.

De même, des parois 29 permettent de séparer la piscine de stockage des équipements internes du réacteur de la zone 8 située à l'aplomb de la cuve, des passages étant prévus cependant pour les palans 24 de transport des blocs 26.

Enfin, le volume intérieur de la cuve 1 est isolé de la piscine 8 du réacteur, par des parois 30 afin de limiter le rayonnement dans la zone située au-dessus du puits de cuve 2.

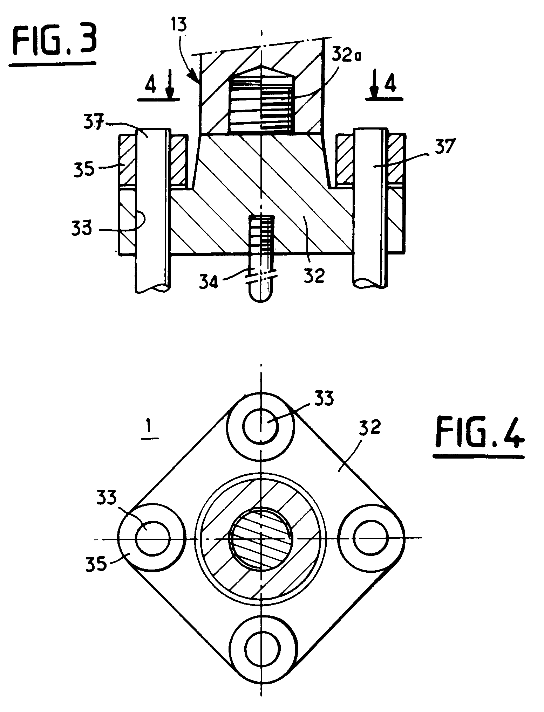

Sur les figures 3 et 4, on a représenté la partie inférieure du mât 13 du dispositif de levage 12 de la cuve 1.

Cette partie inférieure est constituée par une platine 32 qui peut être fixée à la partie inférieure du mât 13, dans sa direction axiale, par une partie filetée 32a engagée dans un trou taraudé ménagé à l'extrémité du mât 13.

La platine 32 comporte quatre ouvertures 33 et un pion de centrage 34 destiné à assurer la fixation et le positionnement de l'extrémité du mât 13 sur le fond de la cuve 1.

Après qu'on ait réalisé le déchargement de la cuve, les tubulures de liaison de cette cuve au circuit primaire et toutes les tuyauteries auxiliaires sont sectionnées puis obturées, de même que les tubes d'instrumentation 10 du fond de cuve.

Quatre trous de traversée du fond de cuve sont usinés ou réusinés dans des dispositions correspondant aux dispositions des trous de traversée 33 de la platine 32 du mât 13.

On pourrait également envisager d'effectuer la fixation de la cuve au mât 13 en utilisant un nombre de trous de traversée du fond de cuve et un nombre de tirants fixés dans ces trous supérieur à quatre, de manière à utiliser des tirants et à usiner des trous de plus faible diamètre.

Le mât 13 peut être mis en place en introduisant le pion de centrage 34 dans un trou de traversée d'instrumentation et en mettant en coïncidence les trous 33 avec les ouvertures du fond de cuve qui ont été usinées ou réusinées. L'ensemble des ouvertures de passage des tubes d'instrumentation, à l'exception des ouvertures qui ont été éventuellement réusinées, est obturé et la fixation du mât 13 est assurée par des tiges filetées 37 fixées sur la platine 32 par des écrous 35.

Une plaque de fixation 36 (voir figure 2) comportant des ouvertures dans des positions correspondant aux ouvertures 33 de la platine 32 est placée sous le fond de cuve de manière que les tiges filetées 37 s'engagent dans les ouvertures de cette plaque de fixation 36.

La fixation du mât 13 est complétée par des écrous engagés sur les tiges 37 et venant en appui de serrage contre la face inférieure de la plaque 36.

La cuve 1 est ainsi solidement fixée à l'extrémité du mât 13 qui est monté mobile dans la direction verticale, suivant l'axe de la structure tubulaire 14 et à l'intérieur de cette structure.

Des dispositifs de calage dans les directions radiales sont également intercalés entre la structure tubulaire 14 et le mât 13, de manière à assurer le guidage et le maintien du mât 13 pendant ses déplacements dans la direction verticale. Des joints gonflables sont également intercalés entre le mât 13 et la structure 14, de manière à assurer un isolement ou un confinement du volume intérieur de la cuve 1, pendant les opérations de démantèlement.

Enfin, comme indiqué plus haut, la cuve est maintenue par les bras 15 et les vérins 16 dans une position telle que son axe soit aligné avec l'axe du mât 13 et de la structure tubulaire 14.

Comme il est visible sur la figure 5, la structure de support 11 comporte deux poutres principales parallèles entre elles 11a et 11b et quatre poutres latérales 11c, 11d, 11e et 11f disposées en étoile autour de l'axe du puits de cuve du réacteur.

Les extrémités des poutres 11a à 11f reposent sur la structure en béton du réacteur, par exemple sur les portées d'appui de la dalle anti-missiles située à l'aplomb du puits de cuve et au niveau supérieur 8a de la piscine du réacteur.

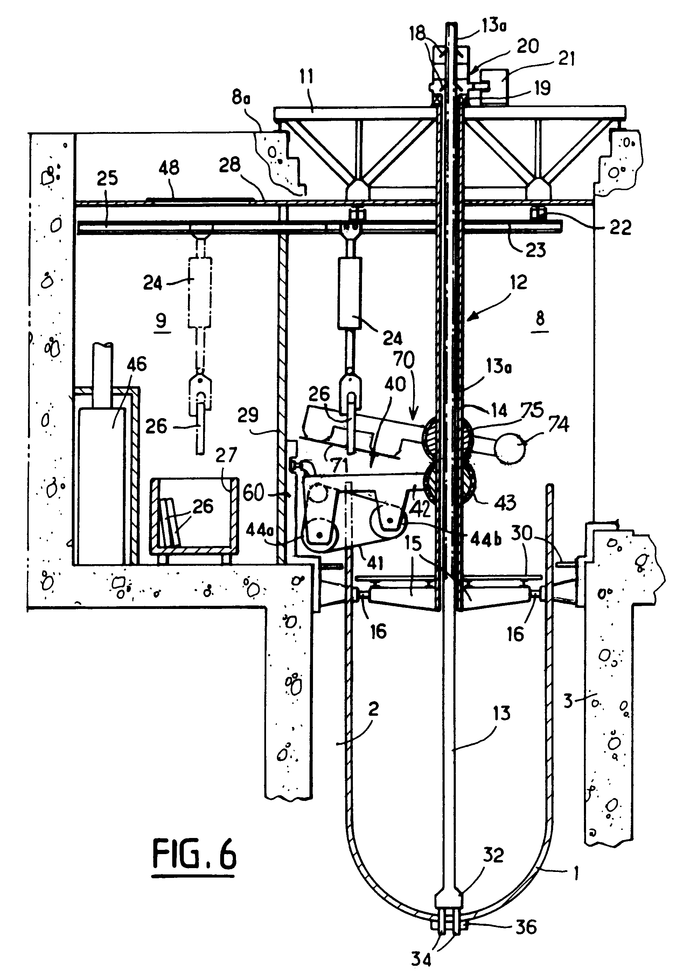

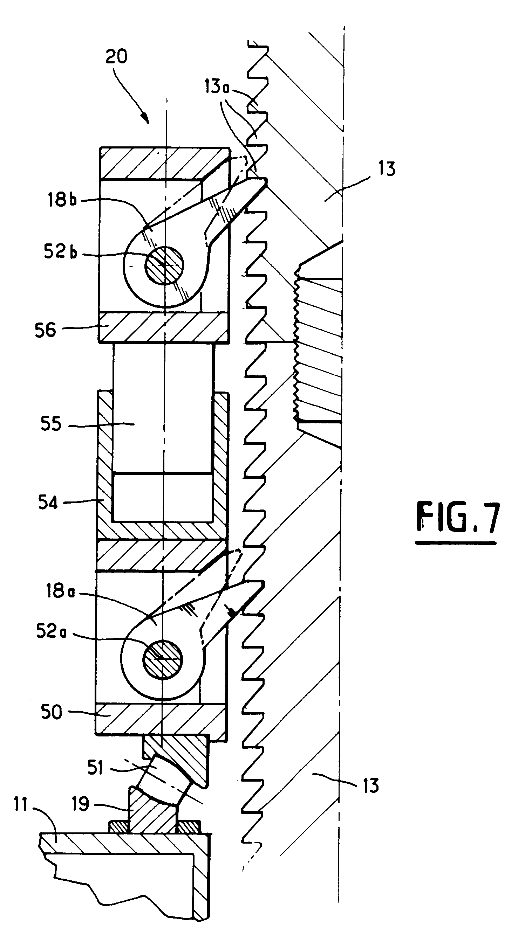

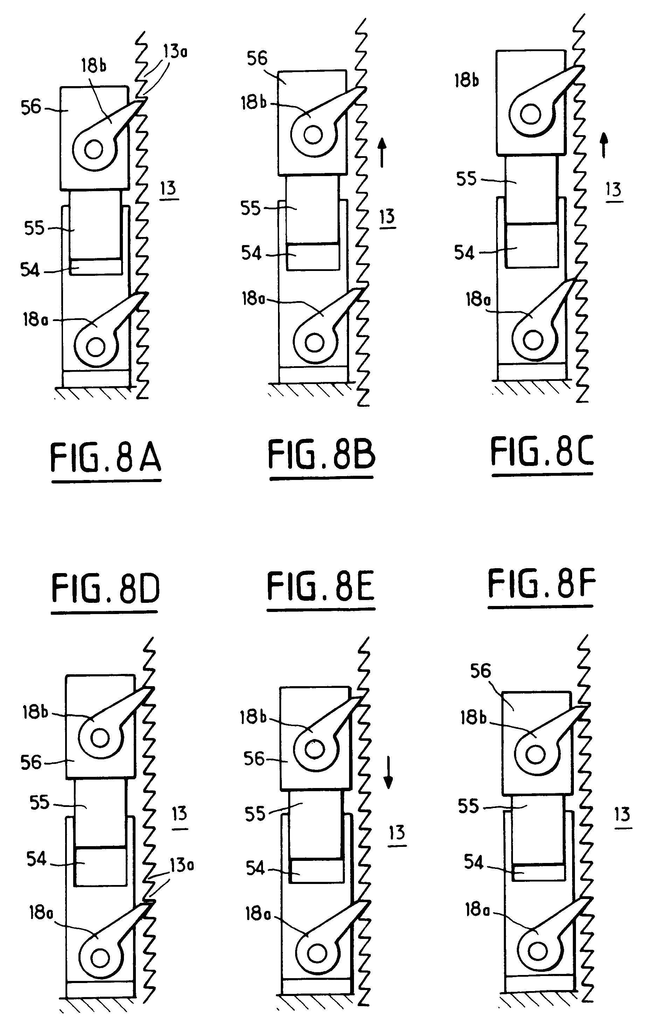

Sur la figure 6, on a représenté l'ensemble du dispositif permettant de réaliser le démantèlement de la cuve, pendant une opération de découpage de la paroi de la cuve.

Les éléments correspondants sur les figures 2 et 6 portent les mêmes repères, le dispositif tel que représenté sur la figure 6 comportant, en plus des moyens de levage de la cuve et de manutention des blocs découpés 26, un ensemble de découpage horizontal 40 et un ensemble de découpage vertical 70 montés sur la structure tubulaire 14.

L'ensemble de découpage horizontal 40 est constitué par une scie à ruban 41 montée sur un support 42 fixé par l'intermédiaire d'un palier à rotule 43 sur la structure tubulaire 14. Le support de scie 42 peut être déplacé pour réaliser le découpage de la paroi de la cuve, de la manière qui sera décrite en détail dans la suite du texte.

L'ensemble de découpage vertical 70 constitué par une deuxième scie à ruban 71 permet de séparer la tranche de la paroi de la cuve découpée par la scie à déplacement sensiblement horizontal en blocs de matériaux irradiés 26 qui sont transportés par les palans 24 dans la piscine de stockage des internes 9 et déposés dans un conteneur de stockage et d'évacuation 27.

Le découpage de la paroi de la cuve sur une certaine hauteur est réalisé après levage de la cuve 1 grâce au mât 13 et à l'ensemble de levage 20, sur une certaine distance dans la direction verticale. L'ensemble de levage 20 est constitué par un dispositif à cliquets qui sera décrit ci-après.

Un dispositif 46 d'aspiration et de filtration des gaz dans la piscine 9 de stockage des équipements internes est disposé dans une zone isolée de cette piscine, de manière à évacuer les gaz contaminés par des matières radio-actives présents dans la zone de démantèlement et dans la zone de stockage du matériau irradié.

Une ouverture d'accès permettant l'évacuation du conteneur 27 renfermant les blocs de matériau irradié est prévue dans la paroi de confinement biologique 28, cette ouverture étant fermée, pendant les opérations de démantèlement, par une dalle 48 en matériau absorbant les radiations.

Comme il est visible sur la figure 7, le dispositif de levage à cliquets 20 comporte un support 50 reposant par l'intermédiaire du palier de pivotement 19 ayant pour axe l'axe du mât 13 confondu avec l'axe du puits de cuve 2 et l'axe de la cuve 1, sur la structure de support 11.

Le palier 19 est un palier à rouleaux dont les rouleaux 51 sont inclinés vers l'intérieur et vers le bas, de manière à assurer un alignement parfait de l'axe du mât 13 par rapport à l'axe du puits de cuve.

Le support 50 du dispositif de levage 20 présente une forme annulaire et porte quatre cliquets fixes tels que le cliquet 18a, placés à 90° les uns des autres autour de l'axe du mât 13 et montés pivotants sur le support 50 autour d'axes horizontaux tels que l'axe 52a.

La partie supérieure du support 50 constitue un corps de vérin 54, au niveau de chacun des cliquets fixes 18a, dans lequel est montée une tige de vérin 55 de grande section portant à son extrémité supérieure un support 56 dans lequel est monté pivotant, autour d'un axe horizontal 52b, un cliquet mobile 18b.

Les cliquets 18a et 18b comportent une partie d'extrémité profilée dont la forme correspond à la forme de l'espace délimité entre deux dents successives de la denture 13a du mât 13.

Les cliquets 18a et 18b sont susceptibles de pivoter d'un certain angle, de faible amplitude, entre leur position représentée en traits pleins sur la figure 7 et leur position représentée en traits interrompus.

Dans la position représentée en traits pleins, les cliquets sont en prise avec la denture 13a du mât 13 et, dans leur position représentée en traits interrompus, ces cliquets sont dans une position désengagée par rapport à la denture 13a.

Sur les figures 8A à 8F, on a représenté de manière schématique les cliquets 18a et 18b ainsi que le mât 13 et le vérin d'actionnement 54 des cliquets mobiles 18b, dans différentes positions successives au cours d'une phase de déplacement dans la direction verticale et vers le haut du mât 13 à la partie inférieure duquel est fixée la cuve 1.

Sur la figure 8A, le mât 13 est en appui sur le cliquet fixe 18a dans sa position d'engagement à l'intérieur de la denture 13a.

La tige du vérin 55 est en position basse.

Pour effectuer le levage du mât 13 et de la cuve 1, on alimente la chambre du vérin 54, de manière à déplacer le piston 55 et le support 56 vers le haut, comme représenté sur la figure 8B. Le cliquet d'appui 18a qui présente une rampe correspondant à la pente de la denture 13a vient se placer en position désengagée par glissement de sa rampe sur la denture. Le mât 13 repose sur le cliquet mobile 18b qui assure son levage grâce au vérin 54.

Pendant le levage du mât 13, comme représenté sur les figures 8C et 8D, le cliquet fixe 18a se désengage totalement de la denture par pivotement vers le haut puis échappe au sommet de la dent avec laquelle il était en contact, lorsque le sommet de la dent parvient au niveau de l'extrémité du cliquet 18a. Le cliquet 18a est alors libéré et retombe par pivotement dans l'espace situé en-dessous du sommet de la dent, sa surface inclinée venant en contact avec la rampe de la denture 13a.

Comme représenté sur la figure 8E, le vérin 54 à double effet est alimenté de manière à provoquer la descente de la tige 55 et du cliquet mobile 18b qui se désengage de la denture 13a, le mât 13 venant reposer sur le cliquet fixe 18a.

Comme il est visible sur la figure 8F, le cliquet 18b vient se replacer dans un espace entre deux dents situé en-dessous de l'espace dans lequel ce cliquet 18b se trouvait engagé avant le déplacement du mât 13, comme représenté sur la figure 8A.

Les cliquets 18a et 18b sont dans des positions identiques sur les figures 8A et 8F, le mât 13 s'étant déplacé d'un pas de la crémaillère 13a.

Le déplacement du vérin 55 est égal au pas de la crémaillère augmenté d'un certain jeu nécessaire pour réaliser l'engagement et le désengagement des cliquets 18a et 18b.

Pour réaliser le levage d'une cuve d'un réacteur nucléaire à eau sous pression, on a utilisé quatre ensembles à cliquets 18a et 18b et quatre vérins disposés à 90° les uns des autres autour de l'axe du mât 13. Chacun des vérins présente une force de levage de 100 tonnes, de sorte que la capacité totale de levage est de 400 tonnes.

Les vérins ont une course de 60 mm et le pas de la denture 13a du mât 13 est de 50 mm.

Le relevage progressif du mât 13 et de la cuve 1 est réalisé en toute sécurité grâce aux cliquets auxquels sont associés des dispositifs de contrôle du bon engagement des cliquets dans la denture 13a.

Le levage de la cuve est effectué sur une distance verticale correspondant à un certain nombre de pas de déplacement de la crémaillère, de manière à présenter au-dessus du niveau du fond de la piscine des internes une certaine hauteur de paroi de la cuve 1 sur laquelle on réalise le découpage de blocs de matériau, de la manière qui sera décrite ci-dessous.

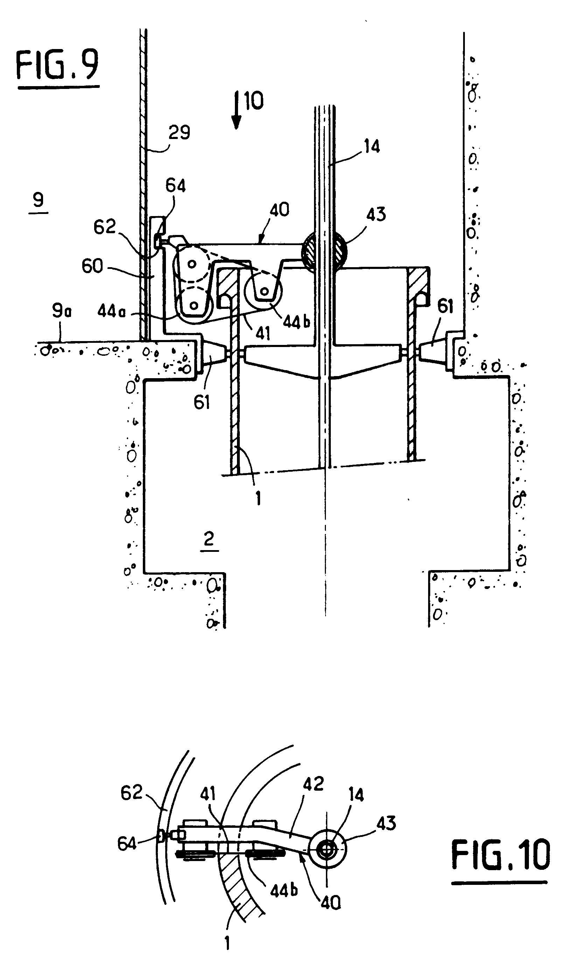

Sur les figures 9 et 10, on a représenté plus en détail la machine de découpage 40 constituée par une scie à ruban représentée sur la figure 6.

Le ruban 41 de la scie est monté sur des poulies 44a et 44b entraînées en rotation par une motorisation.

Le découpage de la paroi de la cuve 1 est réalisé à un niveau situé juste au-dessus du niveau du fond 9a de la piscine des équipements internes.

Un dispositif de guidage et de centrage 60 est placé sur le rebord supérieur du puits de cuve 2, au niveau du fond 9a de la piscine de stockage des équipements internes 9.

Le dispositif 60 comporte des butées d'appui 61 permettant de réaliser le centrage de la cuve 1 et l'alignement de son axe suivant l'axe commun au puits 2 et à la structure tubulaire 14 sur laquelle est fixé le dispositif de découpage 40, par l'intermédiaire du palier 43.

Le dispositif de guidage 60 comporte une rainure 62 de forme hélicoïdale dont l'axe correspond à l'axe du puits de cuve 2. La machine de découpage 40 comporte un galet de guidage 64 se déplaçant à l'intérieur de la rainure 62, pendant le découpage de la cuve.

La rainure 62 a une amplitude angulaire déterminant le déplacement en rotation de la lame de scie 41 autour de l'axe de la cuve, de l'ordre de 30°. Le support 42 de la machine de découpage qui est monté rotatif sur la structure tubulaire 14 par l'intermédiaire du palier à rotule 43 se déplace en rotation autour de l'axe de la structure tubulaire 14 confondu avec l'axe de la cuve, de manière à décrire un angle de 30° autour de cet axe en réalisant une découpe d'une partie de la paroi de la cuve 1, suivant une hélice dont la forme est homothétique de l'hélice constituée par la rainure de guidage 62. Au cours de son déplacement, le support 42 de la machine de découpage est également susceptible de pivoter dans une direction verticale, grâce à la constitution du palier 43 sous la forme d'une rotule. La lame de scie 41 constituée sous la forme d'un ruban est entraînée en rotation par un moteur d'entraînement.

Après qu'on ait réalisé le découpage de la paroi de la cuve 1 suivant un secteur cylindrique d'une amplitude de 30° et le long d'une hélice ayant pour axe l'axe de la cuve, la machine de découpage 40 est ramenée dans sa position d'origine et on fait tourner la cuve dans le sens inverse du découpage grâce au dispositif de mise en rotation 21 du mât 13 tout en la soulevant d'une hauteur correspondant à un pas de déplacement du mât 13, de manière à ramener la lame de coupe 41 jusqu'à l'extrémité de l'entaille hélicoïdale précédemment réalisée.

Une nouvelle coupe d'amplitude 30° et de forme hélicoïdale est réalisée dans la paroi de la cuve par déplacement de la machine de découpage 40 en rotation autour de l'axe de la cuve.

On peut ainsi réaliser par des déplacements successifs en rotation de la machine de découpage 40 et en translation et en rotation de la cuve 1, une découpe de forme hélicoïdale, sur tout ou partie de la périphérie de la cuve.

La hauteur totale H de la tranche de la paroi découpée au cours d'un tour complet de la machine de découpage est égale au pas de déplacement P du mât 13 multiplé par le nombre de déplacements en rotation de la machine dans le sens dans lequel on effectue le découpage. Dans le cas d'un déplacement en rotation de 30° de la machine, le nombre de déplacements au cours d'un tour est de 12, d'où H = 12P, dans le cas où le pas P est de 50 mm, la hauteur H découpée à chaque tour est de 600 mm.

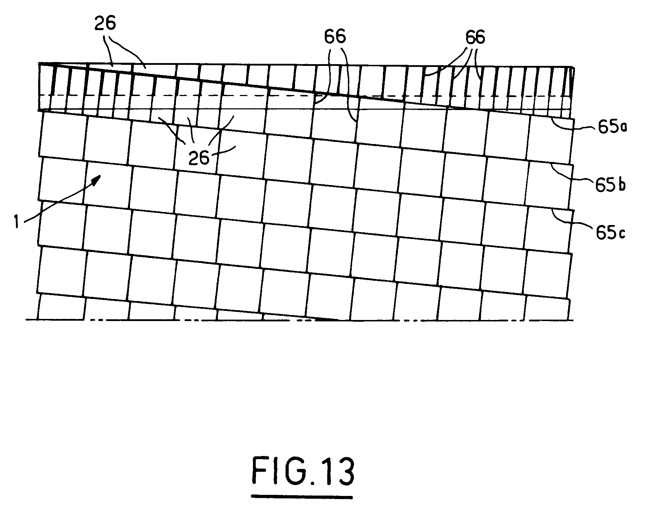

Sur la figure 13, on voit la développée des découpes 65a, 65b, 65c en forme d'hélices faiblement inclinées par rapport au plan horizontal réalisées dans la paroi de la cuve 1 par la machine de découpage représentée sur les figures 9 et 10.

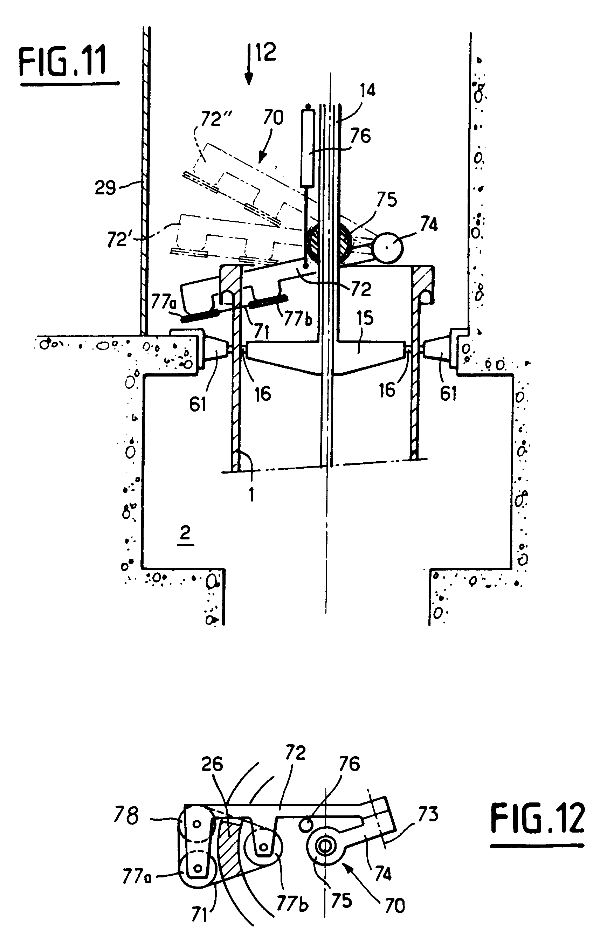

Sur les figures 11 et 12, on a représenté la machine de découpage 70 permettant de réaliser des découpes rectilignes dans une direction faisant un angle faible par rapport à la verticale, de manière à réaliser un tronçonnage de la paroi de la cuve dans laquelle on a réalisé une ou plusieurs découpes dans une direction sensiblement horizontale, telle que les découpes 65a, 65b, 65c représentées sur la figure 13.

La machine de découpage 70 représentée sur les figures 11 et 12 permet de réaliser des découpes successives 66 (figure 13), dans la paroi de la cuve 1, de manière à constituer des blocs 26 de matériau irradié délimités par les découpes horizontales et verticales.

Les blocs 26, comme il a été expliqué plus haut, sont pris en charge par un palan 24 qui permet de transporter ces blocs dans un conteneur de stockage 27 disposé dans la piscine des équipements internes.

La machine 70 de découpage dans la direction verticale comporte un support 72 monté pivotant autour d'un axe horizontal 73 sur un second support 74 lui-même solidaire de la partie tournante 75 d'un palier monté rotatif autour de la structure tubulaire 14.

Un vérin d'actionnement 76 dont le corps est solidaire de la structure tubulaire 14 et la tige reliée au support 72 de la machine de découpage 70 permet de faire pivoter le support 72 autour de l'axe 73.

Sur la figure 11, on a représenté une première position en traits pleins du support 72 et deux positions 72′ et 72˝ en traits interrompus obtenues lors du pivotement vers le haut du support 72 à partir de sa position basse représentée en traits pleins.

L'outil de découpage proprement dit est constitué par une scie à ruban montée à la partie inférieure du support 72.

La mise en tension et l'entraînement du ruban 71 de la scie sont assurés par deux poulies 77a et 77b montées folles sur le support 72 et par une poulie motrice 78.

L'axe 73 de pivotement du support 72 par rapport au support 74 peut être légèrement incliné par rapport au plan horizontal, de manière que le pivotement du support 72 et du ruban 71 de la scie, sous l'effet du vérin 76, se produise dans un plan légèrement incliné par rapport à la verticale. On obtient ainsi des découpes telles que les découpes 66 légèrement inclinées par rapport à la direction verticale.

En faisant tourner le support 72 autour de l'axe de la cuve, grâce au palier 75, on peut venir placer l'outil de découpage 70 dans des positions successives telles que le ruban 71 réalise le découpage de blocs 26 dans la paroi de la cuve 1, après qu'on ait réalisé des découpes horizontales telles que les découpes 65a, 65b, 65c visibles sur la figure 13.

Le centrage de la cuve 1 et l'alignement de son axe par rapport à l'axe de la structure tubulaire 14 sont assurés par les bras de centrage 15 et par les vérins 16 ainsi que par les dispositifs de centrage externes 61.

Comme il est visible sur la figure 13, la première découpe 65a dans la direction circonférentielle de la cuve, légèrement inclinée par rapport au plan horizontal permet une pénétration de la scie de découpage horizontale à l'intérieur du métal de la paroi de la cuve suivant un angle faible et une avance progressive suivant la direction axiale de la cuve.

La première couronne de métal délimitée par une découpe hélicoïdale est tronçonnée par la scie de découpage verticale, suivant des découpes 66, pour constituer une première série de blocs 26 qui peuvent être évacués et stockés dans un conteneur placé dans la piscine des équipements internes.

Les couronnes suivantes délimitées par des découpes hélicoïdales et de hauteur sensiblement constante sont de même tronçonnées par la scie de découpage verticale pour constituer des blocs 26 de forme sensiblement rectangulaire ou carrée qui sont évacués l'un à la suite de l'autre.

Le démantèlement de la cuve est assuré par réalisation successive de découpes sensiblement horizontales et de découpes sensiblement verticales délimitant des blocs 26 qui sont évacués l'un à la suite de l'autre.

Pendant le découpage des blocs pour réaliser le démantèlement de la cuve, la cuve 1 peut être remplie d'eau jusqu'à un niveau se trouvant en-dessous de sa partie en cours de découpage ou éventuellement vide d'eau. Le niveau d'eau dans la cuve peut être abaissé, pendant la progression du découpage en direction du fond de cuve, avant chaque opération de levage de la cuve entre deux séries d'opérations de découpage successives.

Les opérations de découpage sont réalisées à un niveau sensiblement constant situé légèrement au-dessus du niveau supérieur du puits de cuve.

On évite ainsi d'effectuer le découpage à l'intérieur du puits de cuve et depuis la surface interne de la cuve, ce qui limite la pollution par des produits radio-actifs, des structures en béton délimitant le puits de cuve.

En outre, les outillages utilisés pour le découpage sont plus facilement accessibles et leur commande et leur guidage sont également facilités.

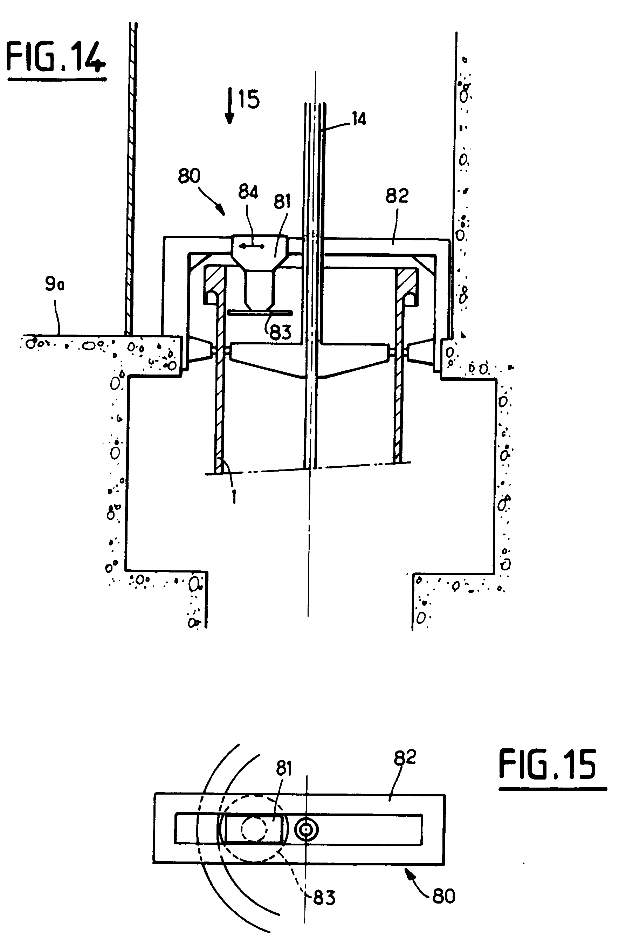

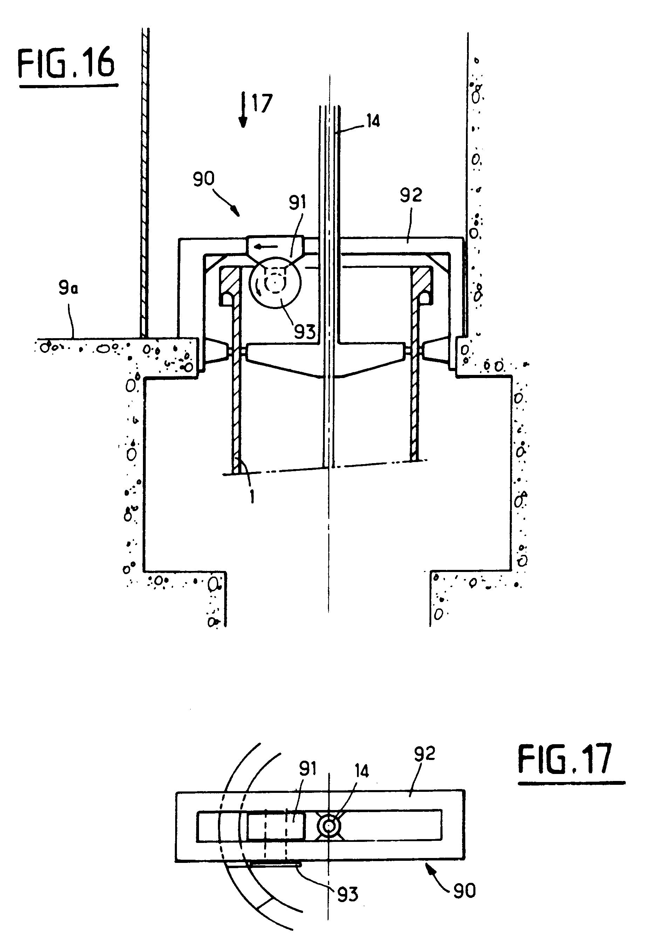

Sur les figures 14 et 15 ainsi que sur les figures 16 et 17, on a représenté des variantes de réalisation du dispositif de découpage horizontal et du dispositif de découpage vertical permettant de réaliser le démantèlement de la cuve 1 d'un réacteur par découpage de blocs dans la paroi de cette cuve.

Le dispositif de découpage horizontal 80 représenté sur les figures 14 et 15 et le dispositif de découpage vertical 90 représenté sur les figures 16 et 17 sont constitués par une scie circulaire respectivement 81 et 91 montée mobile dans une direction radiale par rapport à la cuve 1, sur un portique respectivement 82 et 92 placé dans une direction transversale au-dessus du puits de cuve.

Dans le cas du dispositif 80 de découpage dans une direction horizontale, le disque 83 de la scie circulaire 81 est placé dans un plan horizontal et monté rotatif autour d'un axe vertical. Le mouvement d'avance de la scie circulaire 81 dans le sens de la flèche 84 permet de réaliser une découpe horizontale dans la paroi de la cuve 1 et sur toute son épaisseur, légèrement au-dessus du puits de cuve et du fond 9a de la piscine des équipements internes.

Dans le cas où l'on utilise un dispositif de découpage comportant une scie circulaire, il est possible de réaliser une découpe parfaitement horizontale, la pénétration dans le métal de la paroi de la cuve étant réalisée par l'intérieur de la cuve et suivant un plan de section droite de cette cuve.

La scie circulaire de découpage vertical 91 comporte un disque de scie 93 situé dans un plan vertical et monté rotatif autour d'un axe horizontal.

La pénétration dans le métal de la paroi de la cuve est réalisée par l'intérieur de la cuve et dans un plan axial. Les découpes peuvent être parfaitement verticales et perpendiculaires aux découpes horizontales réalisées précédemment. On obtient ainsi des blocs 26 en matériau irradié de forme rectangulaire ou carrée délimités par les découpes horizontales et les découpes verticales.

Le découpage de la paroi de la cuve est effectué en faisant tourner la cuve d'un certain angle entre deux opérations de découpage mettant en oeuvre successivement le dispositif 80 de découpage dans la direction horizontale et le dispositif 90 de découpage dans la direction verticale.

Les outils de découpage sont commandés à distance et les opérations de découpage sont réalisées dans tous les cas, dans une zone permettant d'éviter une contamination importante des structures du réacteur par des produits radio-actifs.

Sur la figure 18, on voit une cuve 101 d'un réacteur nucléaire refroidi à l'eau, au cours d'une phase préparatoire préalable à son démantèlement.

La cuve 101 est disposée à l'intérieur d'un puits de cuve 102 ménagé à l'intérieur de la structure 103 en béton du réacteur nucléaire.

Le puits de cuve 102 débouche à sa partie supérieure dans la piscine 104 du réacteur.

Pour réaliser le démantèlement des composants du réacteur et en particulier le démantèlement de la cuve 101, le réacteur a été refroidi après son arrêt définitif et la piscine 104 a été remplie d'eau. On a alors réalisé le démontage du couvercle de la cuve et le déchargement sous eau des assemblages du coeur et des équipements internes disposés dans la cuve. La piscine du réacteur est ensuite vidangée et la cuve est décontaminée, par exemple par circulation d'un réactif chimique au contact de sa surface interne.

La cuve est vidangée et on met en place un dispositif de confinement du puits de cuve.

Un échafaudage 107 est mis en place dans le prolongement du puits de cuve, en-dessous du fond de cuve 101a de forme hémisphérique.

Des outillages de coupe sont introduits dans le puits de cuve de manière à réaliser le découpage des tuyauteries de liaison de la cuve au circuit du réacteur, au niveau des tubulures de raccordement 105, 105' et 106, 106'. On réalise également le découpage des tubes-guides ou des tubes d'instrumentation 108 traversant le fond 101a de la cuve. Cette opération est réalisée depuis la partie supérieure de l'échaufaudage 107.

On met en place sous le fond 1a de la cuve un support 110 visible en particulier sur la figure 19.

Le support 110 comporte une plaque d'appui 10a dont la fixation sous le fond de cuve est assurée par des tiges 111 engagées dans des tubes-guides ou des tubes d'instrumentation traversant le fond de cuve 101a, suivant le type de cuve de réacteur nucléaire auquel est appliqué le procédé de démantèlement suivant l'invention.

Les tiges 111 comportent une extrémité filetée qui est engagée dans une ouverture traversant la plaque 110a et sur laquelle est vissé un écrou. Les écrous vissés sur les parties d'extrémité filetées des tiges 111 permettent d'assurer la fixation de la plaque 110a qui porte des butées 112 venant en appui sur le fond de cuve 101a, lors du serrage des écrous.

Avant d'effectuer le déplacement par étapes successives dans la direction verticale de la cuve 101 pour permettre son découpage dans une zone située au voisinage de la partie supérieure du puits de cuve 102, à l'intérieur de la piscine 104 du réacteur, on met en place, autour de la partie supérieure de la cuve 101, un joint gonflable 113 permettant de fermer la partie supérieure du puits de cuve 102 et des vérins de guidage 114 permettant d'assurer le centrage et le guidage de la cuve 101, pendant ses déplacements dans la direction verticale.

On met également en place dans la piscine 104 et dans un local 104′ disposé latéralement par rapport à la piscine 4, des moyens de découpage et de manutention qui peuvent être analogues aux moyens décrits plus haut et qui permettent de réaliser le découpage de blocs dans la paroi de la cuve 101 et l'évacuation des blocs découpés dans des conteneurs de stockage.

La cuve de réacteur 101 à laquelle est appliqué le procédé de démantèlement suivant l'invention, dans le cadre de l'exemple de réalisation décrit repose par l'intermédiaire de pieds supports 116 sur un anneau de supportage 115 fixé sur la structure en béton 103 du réacteur, au niveau supérieur du puits de cuve 102.

Sur la figure 21, l'anneau de support 115 a été représenté dans une vue en plan, la surface supérieure de l'anneau 115 comportant dix-huit zones successives 117 dans la direction circonférentielle, dont l'amplitude angulaire est de 20°. Quinze zones 117 sont destinées à recevoir la surface d'appui d'un pied support 116 de la cuve 101.

Les trois zones restantes 117a, 117b et 117c qui sont disposées à la verticale des tubulures de raccordement de la cuve au circuit du réacteur, telles que les tubulures 105 et 105′, ne reçoivent pas de pieds supports de la cuve 101 venant en appui sur l'anneau 115.

Comme il est visible sur les figures 19 et 20, un levage initial de la cuve peut être réalisé grâce à des vérins 120 qui sont intercalés entre l'anneau de support 115 et certains des pieds supports 116.

Les vérins 120 sont disposés à l'intérieur de découpes 121 de l'anneau de support 115 et mis en appui sur des pièces de calage 122.

La hauteur des découpes 121 est suffisante pour qu'on puisse placer un vérin 120 en appui sur les cales 122, en dessous d'un pied support 116, à l'instant initial du levage préalable de la cuve 101.

Comme il est visible sur la figure 21, les découpes 121 sont effectuées dans trois zones réparties à 120° autour de l'anneau 115 correspondant à deux zones 117 successives permettant l'appui d'un pied support 116.

Trois ensembles de deux vérins 120 sont placés dans les découpes 121 ménagées chacune dans deux zones successives 117 de l'anneau 115.

Le levage par passe de la cuve est réalisé par l'action simultanée de trois vérins 120 disposés chacun dans une des trois découpes 121 réparties suivant la périphérie de la cuve.

Après qu'on ait effectué le levage de la cuve sur la hauteur d'une passe en utilisant trois vérins situés chacun dans une découpe 121, on place une pièce de calage d'une hauteur correspondant à la hauteur de la passe en dessous de chacun des vérins qui n'ont pas été utilisés pour le levage et qui sont disposés au voisinage des vérins ayant effectué le levage, dans la même découpe 121 de l'anneau 115.

La passe de levage suivante est effectuée en utilisant les vérins dont on vient d'effectuer le calage, ce qui permet de soulever la cuve d'un pas supplémentaire. On réalise alors le calage du premier ensemble de trois vérins ayant effectué le levage de la cuve.

On réalise ainsi le levage de la cuve par passes successives en plaçant des éléments de calage 23 (voir figure 20) sous chacun des vérins 120.

Au cours des étapes successives du levage de la cuve, on place des pièces de calage sous tout ou partie des pieds supports 116 de la cuve qui ne sont pas utilisés pour effectuer le levage de la cuve par coopération avec un vérin 120.

A l'issue de l'opération de levage initial de la cuve, on met en place en-dessous des pieds supports, dans deux zones 125 et 125′, des pièces de calage d'une hauteur suffisante pour maintenir la cuve dans la position haute atteinte à l'issue du levage initial.

On réalise alors un découpage de l'anneau de support 115 de la cuve dans quatre zones alignées deux à deux, pour permettre le passage de deux profilés ou poutrelles 127, 127′ parallèles entre elles et destinées à constituer une partie du support fixe de la cuve, pendant son déplacement ultérieur dans la direction verticale, par étapes successives.

Les profilés 127, 127′ ont la même hauteur que l'anneau 115 et viennent reposer sur la structure en béton 103 du réacteur, dans une ouverture latérale 131, comme il est visible sur la figure 19. Les pièces de calage 128 permettent d'obtenir une bonne stabilité des profilés 127 et 127′ qui constituent avec l'anneau 115 un support fixe sur lequel repose la cuve, pendant son levage par étapes successives et son découpage.

Comme il est visible sur les figures 22 et 23, à l'issue de l'opération de levage initial de la cuve en utilisant les vérins 120 et les pièces de calage 123, le fond de cuve 101a et le support 110 se trouvent à une certaine hauteur au-dessus de la surface supérieure du support fixe constitué par l'anneau 115 et les profilés 127.

L'espacement vertical existant entre la surface supérieure des profilés 127 et la surface inférieure d'appui du support 110 permet d'introduire entre ces éléments, un module de levage 130 qui sera décrit ci-après.

Le module de levage 130 est introduit par l'ouverture latérale 131 ménagée dans la structure en béton du réacteur, à un niveau situé au voisinage du fond de cuve 101a.

Les rails 127 et 127′ sont disposés suivant la longueur de l'ouverture 131 et constituent un chemin de ripage pour l'élément modulaire de levage 130 lors de sa mise en place en-dessous du support 110 solidaire du fond de cuve 101a.

On va maintenant décrire, en se reportant aux figures 22, 23 et 24, l'élément de levage 130.

L'élément de levage 130 comporte un dispositif de soulèvement 132 et un élément modulaire de support 133 assemblés entre eux par des clavettes 134.

Le dispositif de soulèvement 132 est constitué sous la forme d'un cadre comportant deux montants parallèles 135a et 135b assemblés entre eux par des entretoises 136. Les montants et les entretoises sont constitués par des plaques métalliques assemblées par soudage.

Aux extrémités des montants 135a et 135b sont fixées des boîtes à vérin telles que 137a et 137b à l'intérieur de chacune desquelles est placé un vérin hydraulique dont le corps est en appui sur le fond de la boîte à vérin correspondante.

Comme il est visible sur la figure 24, lorsque l'élément de levage 130 est en position à l'aplomb du fond de cuve 101a, comme représenté sur les figures 22 et 23, les boîtes à vérin 137a et 137b du dispositif de soulèvement 132 se trouvent à la verticale de l'anneau de support 115.

Les tiges des vérins 138a et 138b (figure 23) disposées à l'intérieur des boîtes à vérin 137a et 137b viennent en appui sur la surface supérieure de l'anneau de support 115.

En alimentant les vérins tels que 138a et 138b du dispositif de soulèvement 132, dans le sens produisant l'extension des tiges de vérin, on produit un soulèvement du cadre du dispositif 132 dans une direction perpendiculaire au cadre, par l'intermédiaire du corps de vérin venant en appui sur les parois de fond des boîtes à vérin correspondantes.

Par l'intermédiaire du cadre du dispositif de soulèvement 132, on produit un soulèvement de l'élément modulaire de support 133 qui est fixé sur le cadre du dispositif de soulèvement 132, par l'intermédiaire des clavettes 134.

L'élément modulaire de support 133 est constitué sous la forme d'un cadre à section carrée dont les faces 139 sont reliées, à chacune de leurs extrémités, au niveau des angles du cadre, à des colonnes 140.

Les colonnes 140 sont traversées diamétralement par des ouvertures permettant le passage des clavettes d'assemblage 134 et comportant des extrémités tronconiques mâles ou femelles permettant un empilement stable d'éléments modulaires identiques l'un sur l'autre.

Les dimensions de l'élément modulaire de support 133 sont telles que cet élément modulaire puisse venir se loger à l'intérieur du cadre du dispositif de soulèvement 132 délimité par les montants 135a et 135b et les entretoises 136.

Sur la figure 24, le dispositif de soulèvement 132 et l'élément modulaire de support 133 ont été représentés dans leur position d'assemblage, les montants 135a et 135b présentant des ouvertures traversantes dans l'alignement des ouvertures des colonnes 140 de l'élément modulaire de support 133. Dans cette position, les clavettes 134 peuvent être introduites dans les ouvertures alignées des montants 135a et 135b et des colonnes 140.

Les colonnes 140 de l'élément modulaire 133 sont disposées à la verticale des profilés de support 127 et 127′, lorsque le module de levage 130 est dans sa position de service en-dessous du fond de cuve 101a.

En alimentant les vérins tels que 138a et 138b du dispositif de soulèvement 132, on provoque, par extraction des tiges de vérin, le soulèvement du cadre du dispositif 132 et de l'élément modulaire de support 133 qui est fixé sur ce cadre.

La partie supérieure de l'élément modulaire de levage 133 constituée sous la forme d'un plateau tournant 141 (voir figure 22) vient en contact avec la surface inférieure de la plaque 110a du support 110 solidaire du fond de cuve 101a.

On peut ainsi soulever la cuve 1 reposant par l'intermédiaire du support 110 sur l'élément modulaire de support 133 d'une certaine hauteur correspondant à l'amplitude de déplacement vertical du dispositif de soulèvement 132.

Comme il est visible sur la figure 25, lorsque l'élément de levage 130 est en position haute, cette position de levage étant obtenue par extension des vérins tels que 138a et 138b, un second élément modulaire de support 133′ identique à l'élément 133 peut être introduit en-dessous de l'élément 133 soulevé par le dispositif 132.

L'élément 133 est déplacé par ripage sur le chemin constitué par les profilés 127 et 127′. L'amplitude de soulèvement du dispositif 132 correspond à la hauteur d'un élément modulaire de levage tel que 133 ou 133′ augmentée d'un jeu permettant le passage de l'élément 133′, en-dessous du cadre du dispositif 132 et de l'élément modulaire de support 133 fixé à l'intérieur du cadre du dispositif 132.

Le dispositif 133′ est placé de manière à se trouver exactement dans l'alignement vertical de l'élément modulaire 133.

Les vérins tels que 138a et 138b du dispositif de soulèvement 132 sont alimentés dans le sens inverse du soulèvement, de manière que l'élément 133 vienne reposer sur l'élément 133′ lui-même en appui sur les profilés 127 et 127′, par l'intermédiaire de portées d'appui tronconiques des colonnes 140.

On enlève alors les clavettes d'assemblage 134 assurant la liaison entre le cadre du dispositif de soulèvement 132 et l'élément modulaire de support 133.

Le mouvement de descente du dispositif 132 est alors poursuivi par alimentation des vérins dans le sens voulu, jusqu'au moment où le cadre du dispositif 132 est revenu dans sa position initiale. L'élément modulaire de support 133′ se trouve alors dans la position de l'élément modulaire 133 représenté sur la figure 24.

On peut réaliser l'assemblage de l'élément modulaire de support 133′ et du dispositif de soulèvement 132, en introduisant des clavettes 134 dans les ouvertures alignées des montants du dispositif 132 et des colonnes de l'élément modulaire de support 133′.

Un élément de levage identique à l'élément de levage 130, constitué par le dispositif de soulèvement 132 sur lequel est fixé l'élément modulaire de support 133′, se trouve alors placé en-dessous de l'élément modulaire de support 133 sur lequel repose la cuve, par l'intermédiaire du support 110.

La cuve 101 se trouve soulevée à l'intérieur du puits 102, de manière que sa partie supérieure constituée en particulier par la bride de cuve 101b puisse être découpée, à l'intérieur de la piscine 104 du réacteur et au voisinage de la partie supérieure du puits de cuve 102.

Il est à noter que pendant le découpage à l'issue du déplacement vertical de la cuve grâce au dispositif de soulèvement 132, la cuve 101 repose par l'intermédiaire de son fond 101a, du support 110 et des éléments modulaires de support 133 et 133′ sur les rails 127 et 127′ constituant des éléments du support fixe de la cuve 101, pendant son soulèvement.

La cuve 101 ne se trouve donc pas suspendue à l'intérieur du puits de cuve 102 mais repose, par l'intermédiaire de son fond, pendant les opérations de découpage, sur des éléments de support en appui sur la structure fixe du réacteur.

Les opérations de découpage et de manutention des blocs découpés dans la paroi de la cuve 101 peuvent être réalisées de la manière décrite plus haut.

A l'issue de l'opération de découpage réalisée sur la partie de la cuve se trouvant au-dessus du niveau supérieur du puits de cuve après le déplacement vertical de la cuve obtenu grâce au dispositif 132, ce dispositif de déplacement 132 peut effectuer un nouveau déplacement vertical de la cuve 101 qui repose sur l'élément 133′ assemblé au cadre du dispositif de soulèvement 132, par l'intermédiaire du support 110 et de l'élément modulaire 133.

L'amplitude de soulèvement de la cuve est légèrement supérieure à la hauteur d'un élément modulaire de support tel que 133 et 133′.

Un troisième élément modulaire de support 133˝, identique aux éléments modulaires de support 133 et 133′, est déplacé par ripage sur les profilés 127 et 127′ et placé à la verticale de l'élément 133′ solidaire du cadre du dispositif de soulèvement 132 et placé en position haute par ce dispositif de soulèvement.

Les vérins du dispositif de soulèvement 132 sont ensuite alimentés dans le sens inverse du soulèvement, de manière à reposer l'élément 133′ sur lequel repose la cuve par l'intermédiaire de l'élément 133 et du support 110, sur l'élément modulaire de support 133˝.

La cuve 101 se trouve dans une nouvelle position de levage dans la direction verticale qui permet le découpage d'une nouvelle tranche de la paroi de la cuve, à l'intérieur de la piscine 104, au-dessus du niveau supérieur du puits de cuve 102.

Le découpage de la paroi de la cuve est ainsi effectué par tranches successives après chacun des soulèvements unitaires de la cuve permettant de placer un nouvel élément modulaire de support en-dessous de l'élément dont le soulèvement est réalisé par le dispositif 132 et de faire reposer la cuve, par l'intermédiaire des éléments modulaires empilés, sur ce nouvel élément reposant sur le support fixe de la cuve constitué par les rails 127.

Comme il est visible sur la figure 26, le soulèvement de la cuve par étapes successives permet de réaliser son découpage jusqu'au niveau du fond bombé 101a.

Des éléments de support successifs 133, 133′, 133˝, ... 133n ont été intercalés entre le support 110 solidaire du fond de cuve et le support fixe de la cuve constitué par les rails 127 et 127′.

Il est alors possible de réaliser également le découpage du fond de cuve 101a au voisinage du niveau supérieur du puits de cuve 102, en utilisant un outillage de découpage spécialement adapté.

Le découpage de la cuve a pu être effectué au cours d'opérations successives pendant chacune desquelles la cuve repose, par l'intermédiaire d'un empilement d'éléments modulaires de support, sur une structure fixe elle-même en appui sur le fond de cuve.

Les soulèvements successifs de la cuve ont une amplitude identique et sont obtenus à partir d'un même dispositif de soulèvement qui coopère successivement avec chacun des éléments modulaires de support en appui sur le support fixe.

Le procédé et le dispositif suivant le mode de réalisation qui vient d'être décrit permettent d'obtenir un déplacement vertical de la cuve par étapes successives, de manière simple et de telle manière que la cuve se trouve en appui stable lors de chacune des opérations de découpage consécutives à un déplacement dans la direction verticale.

L'invention ne se limite pas aux modes de réalisation qui ont été décrits.

C'est ainsi que le levage de la cuve peut être réalisé par traction ou par poussée sur le fond de cuve en utilisant des moyens différents de ceux qui ont été décrits.

Dans le cas d'un levage de la cuve par poussée sur le fond, le déplacement initial dans la direction verticale de la cuve permettant de mettre en place l'élément de levage en-dessous du fond de cuve peut être obtenu par tout moyen permettant un soulèvement de la cuve par poussée sur sa partie inférieure.

Le dispositif de soulèvement et l'élément modulaire de support de l'ensemble de levage utilisé pour réaliser un soulèvement unitaire de la cuve peuvent avoir des formes et des structures différentes de celles qui ont été décrites.

La poussée sur le fond inférieur de la cuve ou plus généralement du composant en cours de démantèlement peut être exercé par l'intermédiaire d'un support intermédiaire, comme il a été décrit, ou directement sur une ou plusieurs surfaces de poussée constituées à la partie inférieure du composant.

Les outils de découpage des tronçons de matériau irradié dans la paroi de la cuve peuvent être différents d'une scie à ruban ou d'une scie circulaire. Ces moyens de découpage peuvent être des moyens non mécaniques ; ces moyens peuvent être constitués par exemple par un chalumeau d'oxycoupage, bien que des procédés de découpage thermiques entraînent la formation de vapeur et de particules fines renfermant des produits radio-actifs dont le captage et la filtration peuvent être difficiles à mettre en oeuvre.

Les outils de découpage peuvent comporter des moyens de déplacement et de guidage sur un tour complet autour de l'axe de la cuve. Dans ce cas, le démantèlement de la cuve peut être effectué sans avoir à faire tourner la cuve autour de son axe.

L'évacuation et le stockage des tronçons de matériau irradié peuvent être effectués par des moyens différents de ceux qui ont été décrits. Les tronçons évacués peuvent être traités sur le site du réacteur avant leur stockage dans un site de désactivation ou, au contraire, transportés dans une usine de traitement et mis en forme dans cette usine de traitement, en vue de leur stockage de longue durée.

Le découpage du fond bombé de la cuve peut être réalisé en utilisant les outils de découpage de la paroi cylindrique de la cuve, grâce à des moyens annexes de manutention du fond bombé ou au contraire en utilisant des outillages spéciaux.

Enfin, le procédé et les dispositifs suivant l'invention peuvent s'appliquer au démantèlement de la cuve de tout réacteur nucléaire refroidi à l'eau du type PWR ou BWR ou encore au démantèlement des équipements internes de ces cuves.

Plus généralement, le procédé et les dispositifs suivant l'invention peuvent être utilisés pour réaliser le démantèlement de tout composant irradié d'un réacteur nucléaire comportant au moins une partie de forme tubulaire disposée avec son axe vertical.

## Revendications

1. Procédé de démantèlement d'un composant irradié (1) d'un réacteur nucléaire comportant au moins une paroi de forme tubulaire disposée avec son axe dans la direction verticale et fixée à l'intérieur d'un puits (2) ménagé dans une structure en béton (3), selon lequel on réalise le découpage du composant (1) sous forme de blocs (26) par étapes successives séparées par un déplacement dans la direction verticale et on évacue les blocs (26) découpés pour réaliser leur élimination ou leur stockage, caractérisé par le fait :
- qu'on supprime les éléments de liaison (5, 6, 10) entre la structure en béton (3) et le composant (1),
- qu'on déplace le composant (1) d'une certaine distance dans la direction verticale, suivant son axe, à l'intérieur du puits (2) et par étapes successives,
- qu'on réalise le découpage de la paroi du composant (1) sur une hauteur correspondant sensiblement à la distance verticale de déplacement du composant et de manière à obtenir des blocs (26) du matériau irradié de la paroi (1), au niveau supérieur du puits (2) de la structure en béton (3), après le déplacement du composant (1).

2. Procédé suivant la revendication 1, caractérisé par le fait que le découpage de la paroi du composant (1), de manière à obtenir des blocs (26) de matériau irradié est réalisé par découpe dans une direction sensiblement horizontale suivie de découpes dans une direction sensiblement verticale.

3. Procédé suivant la revendication 2, caractérisé par le fait que la coupe dans une direction sensiblement horizontale est réalisée suivant une hélice faiblement inclinée ayant pour axe l'axe de la cuve et suivie par une opération de découpe suivant une direction faiblement inclinée par rapport à la verticale.

4. Procédé suivant la revendication 2, caractérisé par le fait que la coupe dans une direction sensiblement horizontale est effectuée suivant un plan de section droite du composant (1) et suivie d'opérations de découpe suivant la direction verticale.

5. Procédé suivant l'une quelconque des revendications 1 à 4, caractérisé par le fait qu'on fait tourner la cuve autour de son axe à l'issue de certaines opérations de découpage.

6. Procédé suivant l'une quelconque des revendications 1 à 5, de la demande de brevet principal caractérisé par le fait que, pour réaliser le déplacement du composant (101) dans la direction verticale, par étapes successives :
- on place sous une partie inférieure (101a) du composant (101) et en appui sur un support fixe (115, 127, 127′) reposant sur la structure en béton (103) du réacteur, au voisinage du fond du puits de cuve (102), des premiers moyens de soulèvement (120) du composant (101),
- on réalise le levage du composant (101) par poussée des premiers moyens de soulèvement (120) sur la partie inférieure (101a) du composant (101),
- on introduit un premier élément modulaire de support (133), entre la partie inférieure (101a) du composant (101) et le support fixe (115, 127, 127′) sur lequel l'élément modulaire (133) vient en appui,
- on actionne les premiers moyens de soulèvement (120) dans le sens inverse du levage, pour mettre en appui la partie inférieure (101a) du composant (101) sur le premier élément modulaire (133),
et pour chacune des étapes successives ultérieures de déplacement du composant (101) :
- on réalise un levage unitaire du composant (101) sur une distance verticale déterminée, grâce à des seconds moyens de soulèvement (132) en appui sur le support fixe (115, 127, 127′), en prise avec un élément modulaire de support (133, 133′, 133˝) intercalé entre le composant (101) et le support fixe (115, 127, 127′) et reposant sur le support fixe, avant le levage unitaire du composant (101),
- on introduit un élément modulaire de support ( 133′, 133˝) dont la hauteur est inférieure à la distance verticale de levage unitaire du composant (101) entre l'élément modulaire (133, 133′, 133˝) avec lequel coopère les seconds moyens de soulèvement (132) et le support fixe (115, 127, 127′), et
- on actionne les seconds moyens de soulèvement (132) dans le sens inverse du levage, pour mettre en appui le composant sur le support fixe (115, 127, 127′) par l'intermédiaire des éléments modulaires (133, 133′, 133˝) superposés.

7. Procédé suivant la revendication 6 dans le cas où le composant (101) est une cuve de réacteur nucléaire reposant par l'intermédiaire de pieds supports (116) fixés sur un fond de cuve (101a), sur un anneau de support (115) reposant sur la structure en béton (103) du réacteur, caractérisé par le fait qu'on découpe l'anneau de support (115) à l'aplomb d'une partie au moins des pieds-supports (116),
qu'on dispose un vérin de levage (120) dans chacune des découpes (121) réalisées à l'aplomb d'un pied support (116),
qu'on soulève la cuve (101) sur une distance verticale de levage déterminée en utilisant une partie des vérins (120) venant en appui sur les pieds supports (116) correspondants et qu'après avoir réalisé le levage de la cuve, on place des pièces de calage (123) sous les vérins (120) qui n'ont pas été utilisés pour le levage, de manière à les mettre en appui sur les pieds supports (116) correspondants,
et qu'on réalise le levage de la cuve (101) par passes successives comportant un levage par une partie des vérins (120) et un calage des vérins (120) non utilisés pour le levage.

8. Procédé suivant la revendication 7, caractérisé par le fait qu'on découpe l'anneau de support (115), pour réaliser des zones de découpes alignées deux à deux et qu'on introduit dans les zones des découpes alignées, au moins deux profilés (127, 127′) reposant sur la structure fixe en béton (103) du réacteur et destinés à constituer une partie du support fixe à l'aplomb du fond (101a) de la cuve (101) et un chemin de ripage, pour amener à l'aplomb du fond (101a) de la cuve (101), les éléments de support modulaires (133, 133′, 133˝).

9. Procédé suivant la revendication 8, caractérisé par le fait que les seconds moyens de soulèvement (132) prennent appui sur l'anneau de support (115), pour réaliser le levage unitaire de la cuve (101).

10. Procédé suivant l'une quelconque des revendications 6 à 9, caractérisé par le fait que, préalablement au levage unitaire de la cuve (101), on assemble les seconds moyens de soulèvement (132) à l'élément modulaire de support (133, 133′, 133˝) reposant sur le support fixe (115, 127, 127′) avant le levage unitaire du composant (101), par l'intermédiaire d'éléments amovibles d'assemblage (134).

11. Procédé suivant l'une quelconque des revendications 6 à 10, caractérisé par le fait qu'on fixe sur la partie inférieure (101a) du composant (101), un support (110) par l'intermédiaire duquel la partie inférieure (101a) du composant (101) est mise en appui sur les éléments modulaires de support (133, 133′, 133˝).

12. Dispositif de démantèlement d'un composant irradié (1) d'un réacteur nucléaire comportant au moins une paroi de forme tubulaire, disposée avec son axe dans la direction verticale et fixée à l'intérieur d'un puits (2) ménagé dans une structure en béton (3), caractérisé par le fait qu'il comporte :
- des moyens pour sectionner des éléments de liaison (5, 6, 10) entre la structure en béton (3) et le composant (1),
- une structure de support (11) reposant sur une partie de la structure en béton (3) à l'aplomb du puits de cuve (2),
- des moyens de découpage (40, 70, 80, 90) disposés au niveau supérieur du puits de cuve (2),
- des moyens de manutention (23, 24, 25) de blocs de matériau irradié de la paroi du composant réalisés par découpage,
- des moyens de stockage (27, 27') des blocs de matériau irradié (26) disposés au niveau supérieur du puits (2) et dans une position latérale par rapport au puits (2), et
- un dispositif de levage du composant (1) constitué par un mât (13) vertical comportant, à sa partie inférieure, des moyens (32, 34, 36) de fixation du mât (13) sur une partie inférieure du composant (1), de manière que le mât (13) soit disposé suivant l'axe de la partie tubulaire du composant (1) et un moyen de déplacement (20) du mât (13) dans la direction verticale reposant sur la structure de support (11).

13. Dispositif suivant la revendication 12, caractérisé par le fait que le mât (13) comporte une denture (13a) constituant une crémaillère de direction longitudinale par rapport au mât (13) et que les moyens de déplacement vertical (20) du mât (13) et du composant (1) sont constitués par des mécanismes à cliquets (18a, 18b) comportant chacun un cliquet (18a) monté fixe dans la direction verticale et un cliquet (18b) monté mobile dans la direction verticale sur un support (56) solidaire de la tige (55) d'un vérin de levage (54), les cliquets (18a, 18b) étant montés oscillants suivant un angle limité autour d'un axe horizontal et comportant une partie d'extrémité dont le profil correspond au profil de logements ménagés entre les dents successives de la denture (13a) du mât (13).

14. Dispositif suivant l'une quelconque des revendications 12 et 13, caractérisé par le fait que les moyens de fixation de la partie inférieure du mât (13) sur la partie inférieure du composant (1) sont constitués par une platine (32) portant des tiges (37) destinées à être engagées dans des ouvertures traversant la paroi du composant (1) dans sa partie inférieure et par des moyens de fixation (36) de l'extrémité des tiges en-dessous de la partie inférieure du composant (1).

15. Dispositif suivant l'une quelconque des revendications 12 à 14, caractérisé par le fait qu'il comporte de plus un dispositif (21) de mise en rotation du mât (13) autour de son axe confondu avec l'axe de la partie tubulaire du composant (1).

16. Dispositif suivant l'une quelconque des revendications 12 à 15, caractérisé par le fait qu'il comporte une structure tubulaire à axe vertical suivant l'axe de laquelle est placé le mât (13) et qui comporte, à sa partie inférieure, au voisinage de la partie supérieure du puits de cuve (2), des bras (15) de direction radiale à l'extrémité desquels sont placés des vérins (16) permettant de réaliser le positionnement et le maintien du composant (1) avec son axe suivant l'axe du mât (13).

17. Dispositif suivant l'une quelconque des revendications 12 à 16, caractérisé par le fait que les moyens de découpage (40, 70) sont constitués par des scies à ruban montées sur un support, de manière rotative autour de l'axe du composant (1) et du puits de cuve (2), à une faible distance verticale au-dessus de la partie supérieure du puits (2).

18. Dispositif suivant la revendication 17, caractérisé par le fait que les moyens de découpage comportent un dispositif (40) de découpage dans une direction sensiblement horizontale dont le support (42) est monté rotatif autour de l'axe du puits (2) et du composant (1) et pivotant autour d'un axe horizontal ainsi qu'un dispositif de découpage dans une direction sensiblement verticale (70) monté rotatif autour de l'axe du puits (2) confondu avec l'axe du composant (1) et pivotant autour d'un axe horizontal (73).

19. Dispositif suivant la revendication 18, caractérisé par le fait que le dispositif (40) de découpage suivant une direction sensiblement horizontale comporte un moyen (60) de guidage du support (42) comportant une rainure en forme d'hélice (62) dans laquelle se déplace un galet (64) monté rotatif sur le support (42).

20. Dispositif suivant la revendication 17, caractérisé par le fait que les moyens de découpage comportent un support (42, 72) monté mobile en rotation autour de l'axe du puits (2) et du composant (1), par l'intermédiaire d'un palier (43), 75) fixé sur la structure tubulaire (14).

21. Dispositif suivant la revendication 12, caractérisé par le fait que les moyens de découpage sont cosntitués par des scies à disque montées mobiles sur des éléments de guidage (82, 92) de direction diamétrale par rapport au puits de cuve (2) et au composant (1) fixés sur la structure en béton (3), au niveau supérieur du puits (2).

22. Dispositif de démantèlement d'un composant irradié (1) d'un réacteur nucléaire comportant au moins une paroi de forme tubulaire, disposée avec son axe dans la direction verticale et fixée à l'intérieur d'un puits (2) ménagé dans une structure en béton (3), caractérisé par le fait qu'il comporte :
- des moyens pour sectionner les éléments de liaison (5, 6, 10) entre la structure en béton (3) et le composant (1),
- des moyens de découpage (40, 70, 80, 90) disposés au niveau supérieur du puits de cuve (2),
- des moyens de manutention (23, 24, 25) de blocs de matériau irradié de la paroi du composant réalisés par découpage,
- des moyens de stockage (27, 27') des blocs de matériau irradié (26) disposés au niveau supérieur du puits (2) et dans une position latérale par rapport au puits (2), et
- un dispositif de levage du composant (1) constitué par :
- un dispositif de soulèvement (132) constitué par des plaques métalliques (135a, 135b, 136) assemblées sous la forme d'un cadre et solidaires de boîtes à vérin (137a, 137b) renfermant chacune un vérin (138a, 138b), demanière à déplacer le dispositif de soulèvement (132) dans une direction perpendiculaire au plan du cadre, dans un sens et dans l'autre, et
- une pluralité d'éléments modulaires de levage (133) constitués chacun par des plaques métalliques (139) assemblées sous la forme d'un cadre, la forme et les dimensions du cadre constituant les éléments modulaires de support (133, 133') permettant son introduction à l'intérieur du cadre du dispositif de soulèvement (132) par déplacement du dispositif (132) dans une direction perpendiculaire à son cadre, l'élément modulaire (133) introduit à l'intérieur du cadre du dispositif de soulèvement (132) étant dans une position permettant sa fixation sur le dispositif de soulèvement (132).

23. Dispositif suivant la revendication 22, caractérisé par le fait que le cadre (135a, 135b, 136) du dispositif de soulèvement (132) comporte des ouvertures traversant les plaques métalliques (135a, 135b) constituant le cadre et que chacun des éléments modulaires de support (133, 133′) comporte des ouvertures venant en coïncidence avec les ouvertures du cadre du dispositif de soulèvement (132), dans la position d'assemblage d'un élément modulaire (133, 133′) et du dispositif de soulèvement (132), des moyens de liaison constitués par des clavettes (134) pouvant être introduits dans les ouvertures en coïncidence du cadre du dispositif de soulèvement (132) et de l'élément modulaire de support (133, 133′).

24. Dispositif suivant l'une quelconque des revendications 22 et 23, caractérisé par le fait que chacun des éléments modulaires de support (133, 133′, 133˝) comporte une surface de support du composant (101) constituée par un plateau tournant (141) dont l'axe de rotation est perpendiculaire au plan de support de l'élément modulaire de support (133, 133′, 133˝).

25. Dispositif suivant l'une quelconque des revendications 22, 23 et 24, caractérisé par le fait que chacun des éléments modulaires de support (133, 133′, 133˝) réalisés sous la forme d'un cadre comporte, dans chacun des angles du cadre, une colonne tubulaire (140) sur laquelle sont fixées deux plaques métalliques (139) du cadre de l'élément modulaire (133), les colonnes (140) comportant en outre des moyens de fixation de l'élément modulaire (133, 133′, 133˝) sur le cadre du dispositif de soulèvement (132) et des moyens destinés à coopérer avec des moyens correspondants de colonnes (140) d'un second élément modulaire de support (133, 133′, 133˝), pour assurer un empilement stable des éléments modulaire de support (133, 133′, 133˝) superposés.

## Patentansprüche

1. Verfahren zur Zerlegung eines bestrahlten Bestandteiles (1) eines Kernreaktors, welcher mindestens eine rohrförmige, senkrecht ausgerichtete und im Innern eines in einer Betonstruktur (3) angelegten Schachtes (2) angebrachte Wandung aufweist, nach welchem die Ausschneidung des Bestandteils (1) zur Gewinnung von Blöcken (26) in mehreren aufeinanderfolgenden Schritten aufgrund vertikaler Verschiebung vorgenommen wird, und man die ausgeschnittenen Blöcke (26) austrägt, zum Zwecke der Entsorgung oder Lagerung,
**dadurch gekennzeichnet**, daß :
- man die Verbindungselemente (5, 6, 10) zwischen der Betonstruktur (3) und dem Bestandteil (1) entfernt,
- man den Bestandteil (1) um eine gewisse Entfernung in vertikaler Richtung gemäß seiner Achse im Schachtinnern (2) in mehreren aufeinanderfolgenden Schritten verschiebt,
- man die Ausschneidung der Wandung des Bestandteils (1) jeweils auf einer Entfernung durchführt, die in im wesentlichen dem vertikalen Abstand der Verschiebung des Bestandteils entspricht, derart daß man am oberen Ende des Schachtes (2) der Betonstruktur (3) nach Verschiebung des Bestandteiles (1) Blöcke (26) von bestrahltem Material aus der Wandung (1) erhält.

2. Verfahren gemäß Anspruch 1,
**dadurch gekennzeichnet**, daß die Ausschneidung der Wandung des Bestandteils (1) in Blöcke (26) bestrahlten Materials durch Ausschneidungen im wesentlichen horizontaler Richtung, gefolgt von Ausschneidungen in im wesentlichen vertikaler Richtung, durchgeführt wird.

3. Verfahren gemäß Anspruch 2,
**dadurch gekennzeichnet**, daß die Ausschneidung in im wesentlichen horizontaler Richtung gemäß einer leicht angeschrägten Schraube geführt wird, deren Achse sich mit der Achse des Kessels deckt, und darauf ein gegenüber der vertikalen Richtung leicht geneigter Ausschnittsvorgang erfolgt.

4. Verfahren gemäß Anspruch 2,
**dadurch gekennzeichnet**, daß der Schnitt in im wesentlichen horizontaler Richtung gemäß einer geraden Schnittebene des Bestandteils (1) ausgeführt wird, und darauf vertikale Ausschnittsvorgänge erfolgen.

5. Verfahren gemäß einem der Asprüche 1 bis 4,
**dadurch gekennzeichnet**, daß man den Kessel nach Beendigung gewisser Ausschneidevorgänge um seine eigene Achse dreht.

6. Verfahren gemäß einem der Ansprüche 1 und 5 des Hauptpatentantrages,
**dadurch gekennzeichnet**, daß, um die Verschiebung des Bestandteils (101) in vertikaler Richtung durch mehrere aufeinanderfolgende Schritte zu erzielen :
- man unter einem unteren Teil (101a) des Bestandteils (101) und auf einer festen Auflage (115, 127, 127′) aufliegend, die ihrerseits auf der Betonstruktur des Reaktors aufliegt, in der Nähe des Kesselschachtbodens (102) erste Anhebemittel (120) am Bestandteil (101) anbringt,
- man die Hebung des Bestandteils (101) durch Druckausübung von Seiten der ersten Anhebemittel (120) auf das Unterteil (101a) des Bestandteils (101) durchführt,
- man ein erstes, modulares Auflageelement (133) zwischen der Unterseite (101a) des Bestandteils (101) und der festen Auflage (115, 127, 127′) einführt, auf welche das Modularelement (133) zum Aufliegen kommt,
- man die ersten Anhebemittel (120) entgegengesetzt zur Heberichtung in Betrieb nimmt, um die Unterseite (101a) des Bestandteils (101) auf das erste Modularelement (133) aufzustützen,
und man für jeden der späteren aufeinanderfolgenden Schritte zur Verschiebung des Bestandteils (101) :
- eine einzelne Hebung des Bestandteils (101) auf eine bestimmte vertikale Entfernung dank einer zweiten Gruppe von Anhebemitteln (132) durchführt, welche auf der festen Auflage (115, 127, 127′) ruht und in ein modulares Auflageelement (133, 133′, 133˝) greift, welches vor der einzelnen Hebung zwischen das Bestandteil (101) und die feste Auflage (115, 127, 127′) geschoben wurde und auf jener aufliegt,
- ein modulares Auflageelement (133′, 133˝), dessen Höhe geringer ist als die vertikale Entfernung einer einzelnen Hebung des Bestandteils (101) zwischen das Modularelement (133, 133′, 133˝), mit welchem die zweite Gruppe von Anhebemitteln (132) zusammenarbeitet und die feste Auflage (115, 127, 127′) einführt, und
- die zweite Gruppe von Anhebemitteln (132) entgegengesetzt zur Heberichtung in Betrieb nimmt, um das Bestandteil, unter Mithilfe der übereinandergestellten Modularelemente (133, 133′, 133˝) auf die feste Auflage (115, 127, 127′), aufzustützen.

7. Verfahren gemäß Anspruch 6 falls es sich beim Bestandteil (101) um einen Kernreaktorkessel handelt, welcher mit Hilfe von Stützfüßen (116), die an einem Kesselboden (101a) befestigt sind und auf einem auf der Betonstruktur (103) des Reaktors aufliegenden Stützring (115) stehen,
**dadurch gekennzeichnet**, daß man den Stützring (115) senkrecht zumindest zu einem Teil der Stützfüße (116) ausschneidet,
- man einen Hebezylinder (120) in jeder der senkrecht zu einem Stützfuß (116) vorgenommenen Ausschneidungen (121) ansetzt,
- man den Kessel (101) vertikal auf eine bestimmte Entfernung anhebt, wobei ein Teil der Zylinder (120), welche auf den entsprechenden Stützfüßen (116) aufliegen, verwendet wird, und man, nachdem die Hebung des Kessels erfolgt ist, Stützkeile (123) unter denjenigen Zylindern (120) anbringt, welche nicht an der Hebung beteiligt waren, damit sie auf den entsprechenden Stützfüßen (116) zum Aufliegen kommen,
- und man die Hebung des Kessels (101) in mehreren aufeinanderfolgenden Arbeitsgängen, welche eine Hebung durch einen Teil der Zylinder (120) und eine Unterkeilung der zur Hebung nicht verwendeten Zylinder (120) beinhalten, durchführt.

8. Verfahren gemäß Anspruch 7,
**dadurch gekennzeichnet**, daß man den Stützring (115) ausschneidet, um jeweils zwei zueinander fluchtende Ausschnittbereiche zu erzielen, und man in diese zueinander fluchtenden Ausschnittbereiche mindestens zwei Profile ( 127, 127′) einführt, welche auf der festen Betonstruktur (103) des Reaktors aufliegen und dazu dienen sollen, einen Teil der festen Auflage senkrecht zum Boden (101a) des Kessels (101) zu bilden, und eine Gleitbahn, um die modularen Auflageelemente (133, 133′, 133˝) in senkrechte Stellung zum Boden (101a) des Kessels (101) zu bringen.

9. Verfahren gemäß Anspruch 8,
**dadurch gekennzeichnet**, daß die zweite Gruppe von Anhebemitteln (132) auf den Stützring (115) aufgestützt wird, um die einzelne Hebung des Kessels (101) durchzuführen.

10. Verfahren gemäß einem der Ansprüche 6 bis 9,
**dadurch gekennzeichnet**, daß man vor der einzelnen Hebung des Kessels (101) die zweite Gruppe von Anhebemitteln (132) mit den modularen Auflageelementen (133, 133′, 133˝) zusammenfügt, welche auf der festen Auflage (115, 127, 127′) aufliegen, vor der einzelnen Hebung des Bestandteils (101), und zwar durch abnehmbare Zusammenfügungsmittel (134).

11. Verfahren gemäß einem der Ansprüche 6 bis 10,
**dadurch gekennzeichnet**, daß man auf dem Unterteil (101a) des Bestandteils (101) eine Auflage (110) anbringt, mit Hilfe welcher das Unterteil (101a) des Bestandteils (101) auf den modularen Auflageelementen (133, 133′, 133˝) zum Aufliegen kommt.

12. Vorrichtung zur Zerlegung eines bestrahlten Bestandteils (1) eines Kernreaktors, welches mindestens eine rohrförmige, vertikal mit seiner Achse ausgerichtete und im Innern eines in einer Betonstruktur (3) angelegten Schachtes (2) angebrachte Wandung aufweist,
**dadurch gekennzeichnet**, daß sie folgendes aufweist :
- Mittel zur Durchschneidung der Verbindungsmittel (5, 6, 10) zwischen der Betonstruktur (3) und dem Bestandteil (1),
- eine Auflagestruktur (11), welche auf einem Teil der Betonstruktur (3) senkrecht zum Kesselschacht (2) aufliegt,
- Ausschneidemittel (40, 70, 80, 90), welche am oberen Teil des Kesselschachtes (2) angeordnet sind,
- Handhabungsmittel (23, 24, 25) für die durch Ausschneidung gewonnenen Blöcke bestrahlten Materials aus der Wandung des Bestandteils,
- Mittel zur Lagerung (27, 27′) der Blöcke bestrahlten Materials (26), welche am oberen Teil des Kesselschachtes (2) angeordnet sind und seitlich vom Schacht (2), und
- eine Hebevorrichtung für den Bestandteil (1), bestehend aus einem vertikalen Mast (13), welcher an seinem Unterteil Befestigungsmittel (32, 34, 36) zur Befestigung des Mastes (13) auf einem unteren Teil des Bestandteils (1) aufweist, so daß der Mast (13) in der Achse des rohrförmigen Teils des Bestandteils (1) ausgerichtet ist, und ein Mittel zur Verschiebung (20) des Mastes (13) in vertikaler Richtung, welches auf der Auflagestruktur (11) aufliegt.

13. Vorrichtung gemäß Anspruch 12,
**dadurch gekennzeichnet,** daß der Mast (13) eine Verzahnung (13a) aufweist, welche eine zum Mast (13) längsgerichtete Zahnstange bildet, und daß die Mittel zur vertikalen Verschiebung (20) des Mastes (13) und des Bestandteils (1) in vertikaler Richtung aus Klinkenmechanismen bestehen (18a, 18b), wobei jeder Mechanismus jeweils eine fest montierte, senkrecht ausgerichtete Klinke (18a) und eine bewegliche, in vertikaler Richtung ausgerichtete, auf einer Auflage (56) montierte Klinke (18b) aufweist, wobei diese Auflage (56) mit der Stange (55) eines Hebezylinders (54) fest verbunden ist, und die Klinken (18a, 18b) dergestalt montiert sind, daß sie in einem begrenzten Winkel um die Horizontalachse schwingen, und ein Ende aufweisen, dessen Profil den in den Aufnahmevorrichtungen angelegten Profilen zwischen den aufeinanderfolgenden Zähnen (13a) des Mastes (13) entspricht.

14. Vorrichtung gemäß einem der Ansprüche 12 bis 13,
**dadurch gekennzeichnet**, daß die Befestigungsmittel des Mastunterteils (13) auf dem Unterteil des Bestandteils (1) aus einer Platte (32) zur Aufnahme der Stangen (37), die in die Öffnungen, die die Wandung des Bestandteils (1) an seiner Unterseite durchqueren, gesteckt werden sollen, und aus Befestigungsmitteln (36) der Stangenenden unter der Unterseite des Bestandteils (1), bestehen.

15. Vorrichtung gemäß einem der Ansprüche 12 bis 14,
**dadurch gekennzeichnet**, daß sie zusätzlich eine Vorrichtung (21) zum Rotationsantrieb des Mastes (13) um seine Achse, welche sich mit der Achse des rohrförmigen Teils des Bestandteils (1) deckt, aufweist.

16. Vorrichtung gemäß einem der Ansprüche 12 bis 15,
**dadurch gekennzeichnet**, daß sie eine rohrförmige Struktur mit Vertikalachse, gemäß welcher der Mast (13) aufgestellt ist, aufweist, und welche an ihrer Unterseite, in der Nähe des oberen Teils des Kesselschachtes (2), in radialer Richtung ausgerichtete Arme (15) aufweist, an deren Enden sich Zylinder (16) befinden, welche das Aufstellen und das Halten des Bestandteils (1) mit seiner Achse in der Achse des Mastes (13) ermöglichen.

17. Vorrichtung gemäß einem der Ansprüche 12 bis 16,
**dadurch gekennzeichnet**, daß die Mittel zur Ausschneidung (40, 70) aus auf einer Auflage montierten Bandsägen bestehen, welche um die Achse des Bestandteiles (1) und des Kesselschachtes (2) in geringer vertikaler Entfernung unter dem oberen Teil des Schachtes (2), rotieren.

18. Vorrichtung gemäß Anspruch 17,
**dadurch gekennzeichnet**, daß die Mittel zur Ausschneidung eine Ausschneidevorrichtung (40) in ziemlich horizontaler Richtung aufweisen, deren Auflage (42) rotierend um die Schachtachse (2) und die Achse des Bestandteils (1) montiert ist und um eine Horizontalachse schwenkbar ist, sowie eine Ausschneidevorrichtung in ziemlich vertikaler Richtung (70), welche rotierend um die Achse des Schachtes (2), welche sich mit der Achse des Bestandteils (1) deckt, und um eine horizontale Achse (73) schwenkbar ist .

19. Vorrichtung gemäß Anspruch 18,
**dadurch gekennzeichnet**, daß die Vorrichtung (40) zur Ausschneidung in ziemlich horizontaler Richtung ein Mittel (60) zur Führung der Auflage (42) aufweist, welches eine schraubenförmige (62) Nut aufweist, in welcher eine Rolle (64) läuft, welche rotierend auf der Auflage (42) montiert ist.

20. Vorrichtung gemäß Anspruch 17,
**dadurch gekennzeichnet**, daß die Mittel zur Ausschneidung eine Auflage (42, 72) aufweisen, welche in der Rotation beweglich um die Schachtachse (2) und die Achse des Bestandteils (1) mit Hilfe eines auf der rohrförmigen Stuktur (14) befestigten Lagers (43, 75) montiert ist.

21. Vorrichtung gemäß Anspruch 12,
**dadurch gekennzeichnet**, daß die Mittel zur Ausschneidung aus Kreissägen bestehen, welche in der Rotation beweglich auf in diametraler Richtung zum Kesselschacht (2) und zum Bestandteil (1) ausgerichteten Führungselementen (82, 92) montiert sind, wobei die Führungselemente auf der Betonstruktur (3) am oberen Teil des Schachtes (2) befestigt sind.

22. Vorrichtung zur Zerlegung eines bestrahlten Bestandteils (1) eines Kernreaktors, welches mindestens eine rohrförmige, senkrecht ausgerichtete und im Innern eines in einer Betonstruktur (3) angelegten Schachtes (2), angebrachte Wandung aufweist,
**dadurch gekennzeichnet**, daß sie folgendes aufweist :
- Mittel zur Durschschneidung der Verbindungsmittel (5, 6, 10) zwischen der Betonstruktur (3) und dem Bestandteil (1),
- Ausschneidemittel (40, 70, 80, 90), welche am oberen Teil des Kesselschachtes (2) angeordnet sind,
- Handhabungsmittel (23, 24, 25) für die durch Ausschneidung gewonnenen Blöcke bestrahlten Materials aus der Wandung des Bestandteils,
- Mittel zur Lagerung (27, 27′) der Blöcke bestrahlten Materials (26), welche am oberen Teil des Kesselschachtes (2) angeordnet sind, seitlich vom Schacht (2) und
- eine Hebevorrichtung für das Bestandteil (1), bestehend aus :
- einer Anhebevorrichtung (132), welche aus rahmenförmig zusammengefügten Metallplatten (135a, 135b, 136) bestehen mit Zylindergehäusen (137a, 137b) fest verbunden sind, welche je einen Zylinder (138a, 138b) enthalten, so daß die Anhebevorrichtung (132) senkrecht zur Rahmenebene in beide Richtungen bewegt werden kann, und
- einer Vielzahl von modularen Hebeelementen (133), jeweils aus rahmenförmig zusammengesetzten Metallplatten (139) bestehend, wobei Form und Ausmaße des Rahmens die modularen Auflageelemente (133, 133′) bilden, wodurch dieser Rahmen in den Rahmen der Anhebevorrichtung (132) eingeführt werden kann, indem die Vorrichtung (132) senkrecht zu ihrem Rahmen verschoben wird, wobei das modulare Auflageelement (133), welches in den Rahmen der Anhebevorrichtung (132) eingeführt wurde, sich in einer Stellung befindet, die seine Befestigung auf der Anhebevorrichtung (132) ermöglicht.

23. Vorrichtung gemäß Anspruch 22,
**dadurch gekennzeichnet**, daß der Rahmen (135a, 135b, 136) der Anhebevorrichtung (132) Öffnungen aufweist, welche die den Rahmen bildenden Metallplatten (135a, 135b) durchqueren, und daß jedes der modularen Auflageelemente (133, 133′) Öffnungen aufweist, die sich mit den Öffnungen im Rahmen der Anhebevorrichtung (132) in der zusammengefügten Stellung eines modularen Auflageelementes (133, 133′) mit der Anhebevorrichtung (132) decken, wobei aus Keilen (134) bestehende Verbindungsstücke in die sich deckenden Öffnungen im Rahmen der Anhebevorrichtung (132) und des modularen Auflageelementes (133, 133′) eingeführt werden können.

24. Vorrichtung gemäß einem der Ansprüche 22 oder 23,
**dadurch gekennzeichnet**, daß jedes der modularen Auflageelemente (133, 133′, 133˝) eine Fläche zur Auflage des Bestandteils (101) aufweist, welche aus einem drehbaren Teller (141) besteht, dessen Rotationsachse senkrecht zur Auflageebene des modularen Auflageelements (133, 133′, 133˝) verläuft.

25. Vorrichtung gemäß einem der Ansprüche 22, 23 oder 24,
**dadurch gekennzeichnet**, daß jedes der modularen Auflageelemente (133, 133′, 133˝), welche rahmenförmig ausgelegt sind, in jeder Ecke des Rahmens eine rohrförmige Säule (140) aufweist, auf welcher zwei Metallplatten (139) des Rahmens des modularen Auflageelements (133) befestigt sind, wobei die Säulen (140) außerdem Mittel zur Befestigung des modularen Auflageelements (133, 133′, 133˝) auf dem Rahmen der Anhebevorrichtung (132) aufweisen sowie Mittel zur Zusammenarbeit mit enstprechenden Mitteln von Säulen (140) eines zweiten modularen Auflageelements (133, 133′, 133˝), um eine stabile Stapelung der übereinandergestellten modularen Auflageelemente (133, 133′, 133˝) zu gewährleisten.

## Claims

1. Process for dismantling an irradiated component (1) of a nuclear reactor comprising at least one tubular shell disposed with its axis in the vertical direction and fixed in the interior of a well (2) formed in a concrete structure (3), according to which the component (1) is cut up into blocks (26) in successive stages separated by displacement in the vertical direction and the blocks (26) cut up are discharged for disposal or storage, characterised in that:
- the connecting elements (5, 6, 10) between the concrete structure (3) and the component (1) are removed,
- the component (1) is displaced a certain distance in the vertical direction along its axis in the interior of the well (2) in successive stages,
- the shell of the component (1) is cut up over a height corresponding substantially to the distance of the vertical displacement of the component and so as to obtain blocks (26) of irradiated material of the shell (1) at the top of the well (2) of the concrete structure (3) after the displacement of the component (1).

2. Process according to claim 1, characterised in that the shell of the component (1) is cut up so as to obtain blocks (26) of irradiated material by cutting in a substantially horizontal direction followed by cutting in a substantially vertical direction.

3. Process according to claim 2, characterised in that the cutting in a substantially horizontal direction is effected along a slightly inclined helix having as its axis the axis of the vessel and is followed by a cutting operation in a direction slightly inclined in relation to the vertical.

4. Process according to claim 2, characterised in that the cutting in a substantially horizontal direction is effected along a cross-sectional plane of the component (1) and is followed by cutting operations in the vertical direction.

5. Process according to any one of claims 1 to 4, characterised in that the vessel is rotated about its axis at the end of certain cutting operations.

6. Process according to any one of claims 1 to 5 of the main patent application, characterised in that, in order to displace the component (101) in the vertical direction in successive stages:
- first means (120) for lifting the component (101) are placed under a lower part (101a) of the component (101) to bear against a fixed support (115, 127, 127′) resting on the concrete structure (103) of the reactor in the vicinity of the bottom of the vessel well (102),
- the component (101) is lifted in that the first lifting means (120) push up on the lower part (101a) of the component (101),
- a first modular supporting element (133) is introduced between the lower part (101a) of the component (101) and the fixed support (115, 127, 127′) against which the modular element (133) bears,
- the first lifting means (120) are actuated in the opposite direction to that of lifting in order to bring the lower part (101a) of the component (101) to bear against the first modular element (133),
and for each of the subsequent successive stages of the displacement of the component (101):
- the component (101) is lifted as one unit by a predetermined vertical distance by virtue of second lifting means (132) bearing against the fixed support (115, 127, 127′) engaging with a modular supporting element (133, 133′, 133˝) interposed between the component (101) and the fixed support (115, 127, 127′) and resting on the fixed support prior to the unitary lifting of the component (101),
- a modular supporting element (133′, 133˝), the height of which is less than the vertical unitary lifting distance of the component (101) is introduced between the modular element (133, 133′, 133˝) with which the second lifting means (132) cooperate and the fixed support (115, 127, 127′), and
- the second lifting means (132) are actuated in the opposite direction to that of lifting in order to bring the component to bear against the fixed support (115, 127, 127′) by means of the superimposed modular elements (133, 133′, 133˝).

7. Process according to claim 6, where the component (101) is a nuclear reactor vessel resting by means of supports (116) fixed to the bottom (101a) of the vessel on a support ring (115) resting on the concrete structure (103) of the reactor, characterised in that the support ring (115) is cut up plumb with at least part of the supports (116),
that a lifting jack (120) is disposed in each of the cuts (121) made plumb with a support (116),
that the vessel (101) is lifted by a predetermined vertical lifting distance using part of the jacks (120) bearing against the corresponding supports (116) and that, once the vessel has been lifted, wedge pieces (123) are placed under the jacks (120) not used for lifting so as to bring them to bear against the corresponding supports (116),
and that the vessel (101) is lifted in successive passes comprising lifting by part of the jacks (120) and wedging the jacks (120) not used for lifting.

8. Process according to claim 7, characterised in that the support ring (115) is cut up in order to form cutting zones aligned in pairs and that at least two profile sections (127, 127′) resting on the fixed concrete structure (103) of the reactor and adapted to form part of the fixed support plumb with the bottom (101a) of the vessel (101) and a sliding path are introduced into the aligned cutting zones in order to make the modular supporting elements (133, 133′, 133˝) plumb with the bottom (101a) of the vessel (101).

9. Process according to claim 8, characterised in that the second lifting means (132) bear against the support ring (115) to effect unitary lifting of the vessel (101).

10. Process according to any one of claims 6 to 9, characterised in that, prior to unitary lifting of the vessel (101), the second lifting means (132) are fitted to the modular supporting element (133, 133′, 133˝) resting on the fixed support (115, 127, 127′) prior to unitary lifting of the component (101) by means of movable assembly elements (134).

11. Process according to any one of claims 6 to 10, characterised in that a support (110) by means of which the lower part (101a) of the component (101) is brought to bear against the modular supporting elements (133, 133′, 133˝) is fixed to the lower part (101a) of the component (101).

12. Device for dismantling an irradiated component (1) of a nuclear reactor comprising at least one tubular shell disposed with its axis in the vertical direction and fixed in the interior of a well (2) formed in a concrete structure (3), characterised in that it comprises:
- means for cutting up connecting elements (5, 6, 10) between the concrete structure (3) and the component (1),
- a support structure (11) resting on part of the concrete structure (3) plumb with the vessel well (2),
- cutting means (40, 70, 80, 90) disposed at the top of the vessel well (2),
- means (23, 24, 25) for handling blocks of irradiated material of the shell of the component produced by cutting,
- means (27, 27′) for storing the blocks of irradiated material (26) disposed at the top of the well (2) in a lateral position in relation to the well (2), and
- a device for lifting the component (1) formed by a vertical mast (13) comprising in its lower part means (32, 34, 36) for fixing the mast (13) to a lower part of the component (1) so that the mast (13) is disposed along the axis of the tubular part of the component (1) and a means (20) for displacement of the mast (13) in the vertical direction resting on the support structure (11).

13. Device according to claim 12, characterised in that the mast (13) comprises toothing (13a) forming a rack extending in the longitudinal direction in relation to the mast (13) and that the means (20) for vertical displacement of the mast (13) and the component (1) are formed by ratchet mechanisms (18a, 18b) each comprising a ratchet (18a) fixedly mounted in the vertical direction and a ratchet (18b) movably mounted in the vertical direction on a support (56) integral with the rod (55) of a lifting jack (54), the ratchets (18a, 18b) being mounted to oscillate at a limited angle about a horizontal axis and comprising an end part the profile of which corresponds to the profile of housings formed between the successive teeth of the toothing (13a) of the mast (13).

14. Device according to either of claims 12 and 13, characterised in that the means for fixing the lower part of the mast (13) to the lower part of the component (1) are formed by a plate (32) provided with rods (37) adapted to be engaged in openings traversing the shell of the component (1) in its lower part and by means (36) for fixing the ends of the rods below the lower part of the component (1).

15. Device according to any one of claims 12 to 14, characterised in that it moreover comprises a device (21) for rotating the mast (13) about its axis coinciding with the axis of the tubular part of the component (1).

16. Device according to any one of claims 12 to 15, characterised in that it comprises a tubular structure having a vertical axis along the axis of which the mast (13) is disposed and comprising in its lower part in the vicinity of the top of the vessel well (2), radial arms (15) at the end of which jacks (16) allowing the component (1) to be positioned and held with its axis along the mast (13) are disposed.

17. Device according to any one of claims 12 to 16, characterised in that the cutting means (40, 70) consist of band saws mounted on a support to rotate about the axis of the component (1) and of the vessel well (2) at a short vertical distance above the top of the well (2).

18. Device according to claim 17, characterised in that the cutting means comprise a device (40) for cutting in a substantially horizontal direction, the support (42) of which is mounted to rotate about the axis of the well (2) and of the component (1) and to pivot about a horizontal axis and a device (70) for cutting in a substantially vertical direction mounted to rotate about the axis of the well (2) coinciding with the axis of the component (1) and pivoting about a horizontal axis (73).

19. Device according to claim 18, characterised in that the device (40) for cutting in a substantially horizontal direction comprises a means (60) for guiding the support (42) comprising a helical groove (62) in which a roller (64) mounted to rotate on the support (42) is displaced.

20. Device according to claim 17, characterised in that the cutting means comprise a support (42, 72) movably mounted to rotate about the axis of the well (2) and of the component (1) by means of a bearing (43, 75) fixed to the tubular structure (14).

21. Device according to claim 12, characterised in that the cutting means consist of disc saws movably mounted on guide elements (82, 92) extending in a diametrical direction in relation to the vessel well (2) and to the component (1) fixed to the concrete structure (3) at the top of the well (2).

22. Device for dismantling an irradiated component (1) of a nuclear reactor comprising at least one tubular shell disposed with its axis in the vertical direction and fixed in the interior of a well (2) formed in a concrete structure (3), characterised in that it comprises:
- means for cutting up the connecting elements (5, 6, 10) between the concrete structure (3) and the component (1),
- cutting means (40, 70, 80, 90) disposed at the top of the vessel well (2),
- means (23, 24, 25) for handling blocks of irradiated material of the shell of the component produced by cutting,
- means (27, 27′) for storing the blocks of irradiated material (26) disposed at the top of the well (2) in a lateral position in relation to the well (2), and
- a device for lifting the component (1) formed by:
- a lifting device (132) formed by metal plates (135a, 135b, 136) assembled to form a frame and integral with jack casings (137a, 137b) each enclosing a jack (138a, 138b) so as to displace the lifting device (132) in a direction perpendicular to the plane of the frame in both directions, and
- a plurality of modular lifting elements (133) each formed by metal plates (139) assembled to form a frame, the shape and dimensions of the frame forming the modular supporting elements (133, 133′) allowing it to be introduced into the interior of the frame of the lifting device (132) by displacement of the device (132) in a direction perpendicular to its frame, the modular element (133) introduced into the interior of the frame of the lifting device (132) being in a position allowing it to be fixed to the lifting device (132).

23. Device according to claim 22, characterised in that the frame (135a, 135b, 136) of the lifting device (132) comprises openings traversing the metal plates (135a, 135b) forming the frame and that each of the modular supporting elements (133, 133′) comprises openings coinciding with the openings in the frame of the lifting device (132) in the assembly position of a modular element (133,133′) and of the lifting device (132), wherein connecting means formed by keys (134) can be introduced into the openings coinciding with the frame of the lifting device (132) and the modular supporting element (133, 133′).

24. Device according to either of claims 22 and 23, characterised in that each of the modular supporting elements (133, 133′, 133˝) comprises a surface for supporting the component formed by a rotary plate (141) the axis of rotation of which is perpendicular to the supporting plane of the modular supporting element (133, 133′, 133˝).

25. Device according to any one of claims 22, 23 and 24, characterised in that each of the modular supporting elements (133, 133′, 133˝) in the form of a frame comprises in each of the corners of the frame a tubular column (140) to which two metal plates (139) of the frame of the modular element (133) are fixed, the columns (140) moreover comprising means for fixing the modular element (133, 133′, 133˝) to the frame of the lifting device (132) and means adapted to cooperate with corresponding column means (140) of a second modular supporting element (133, 133′, 133˝) in order to ensure stable stacking of the superimposed modular supporting elements (133, 133′, 133˝).
